(19) Europäisches Patentamt / European Patent Office / Office européen des brevets

(11) **EP 2 509 240 B1**

(12) **EUROPEAN PATENT SPECIFICATION**

(45) Date of publication and mention
of the grant of the patent:
**04.11.2015 Bulletin 2015/45**

(21) Application number: **10834363.3**

(22) Date of filing: **26.11.2010**

(51) Int Cl.:
*H04J 11/00* (2006.01)   *H04L 25/03* (2006.01)
*H04L 27/26* (2006.01)

(86) International application number:
**PCT/JP2010/006908**

(87) International publication number:
**WO 2011/067907 (09.06.2011 Gazette 2011/23)**

(54) **RECEIVER DEVICES AND RECEIVING METHODS**

EMPFANGSVORRICHTUNGEN UND EMPFANGSVERFAHREN

DISPOSITIFS RÉCEPTEURS ET PROCÉDÉS DE RÉCEPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2009 JP 2009276584
04.02.2010 PCT/JP2010/000677
08.11.2010 JP 2010249824**

(43) Date of publication of application:
**10.10.2012 Bulletin 2012/41**

(73) Proprietor: **Mitsubishi Electric Corporation
Tokyo 100-8310 (JP)**

(72) Inventors:
• **SHIMBO, Daisuke
Tokyo 100-8310 (JP)**
• **IDO, Jun
Tokyo 100-8310 (JP)**

(74) Representative: **Hoffmann Eitle
Patent- und Rechtsanwälte PartmbB
Arabellastraße 30
81925 München (DE)**

(56) References cited:
**WO-A1-2007/046503     JP-A- 2004 221 702
JP-A- 2008 537 424**

• **MITSURU NAKAMURA ET AL.: 'The ICI Canceller
based on MMSE in OFDM' ITE TECHNICAL
REPORT vol. 27, no. 16, 28 February 2003, pages
29 - 32, XP008152631**
• **KARSTEN SCHMIDT: 'Low Complexity Inter-
Carrier Interference Compensation for Mobile
Reception of DVB-T' 9TH INTERNATIONAL
OFDM-WORKSHOP 2004 (INOWO'04) 16
September 2004, pages 1 - 5, XP008103304**

## Description

TECHNICAL FIELD

The present invention relates to Doppler shift correction.

BACKGROUND ART

The orthogonal frequency division multiplexing (OFDM) system is a system for transmitting information on a plurality of orthogonal narrow-band carriers and is used in many communication systems such as digital wireless communication and digital terrestrial broadcasting because of its high frequency usage efficiency and good receiving performance in a multipath environment, where a plurality of reflected waves are received.

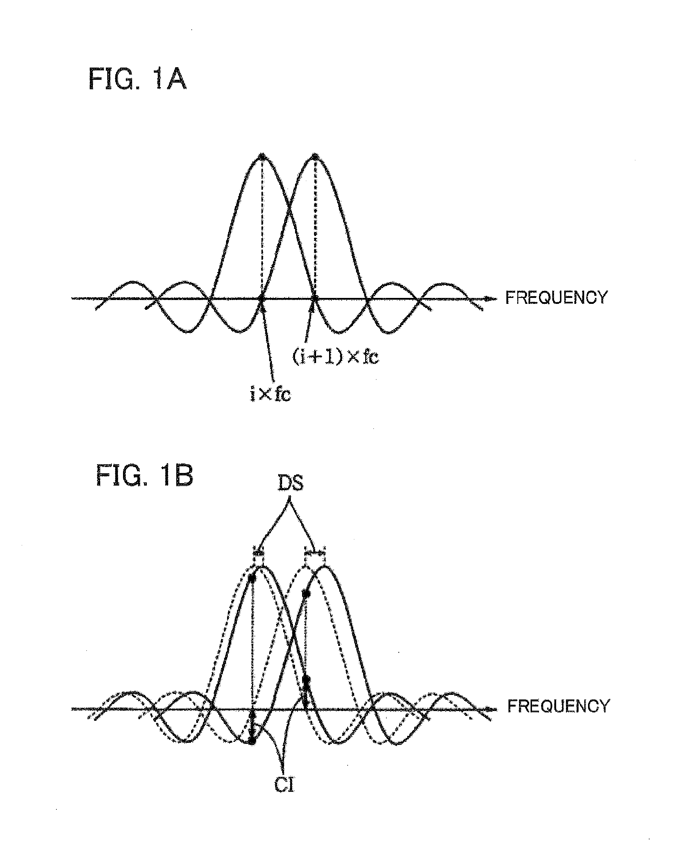

However, there is a problem that when an OFDM signal is received in a mobile device, changes in transmission path property over time modify the orthogonality among the carriers, producing inter-carrier interference. The inter-carrier interference will be described with reference to FIGs. 1A and 1B. If the transmission path property is constant and does not depend on time, the carrier signals cross one another at carrier intervals at an amplitude value of "0" as shown in FIG. 1A, and one carrier does not affect adjacent carriers. If the transmission path property changes over time, as shown in FIG. 1B, a Doppler shift causes each carrier frequency to shift by a Doppler frequency (DS in FIG. 1B), causing the carrier signals to interfere with adjacent carriers (CI in FIG. 1B).

A method of suppressing the inter-carrier interference included in the OFDM signal is disclosed in Patent Document 1, for example. The inter-carrier interference cancellation method described in Patent Document 1 first estimates the transmission path property from a known signal included in the received signal and corrects the received signal in accordance with the estimation result of the transmission path property. The leak-in coefficient of inter-carrier interference is calculated from the temporal variation in the estimated transmission path. Thereafter, the inter-carrier interference component is estimated from the correction result of the received signal and the calculated leak-in coefficient, and the estimated inter-carrier interference component is subtracted from the received signal, thereby suppressing inter-carrier interference.

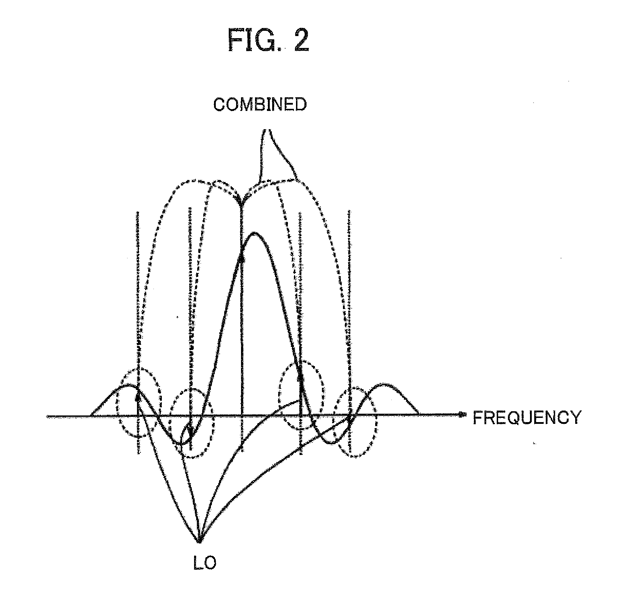

Furthermore, another method of suppressing inter-carrier interference included in the OFDM signal is disclosed in Non-Patent Document 1, for example. In the inter-carrier interference suppression method described in Non-Patent Document 1, the received signal is transformed to a frequency domain and then the sum with each of the adjacent carriers weighted is calculated, thereby suppressing the interference component included in each carrier. The weighting coefficient is calculated by using the minimum mean square error (MMSE) algorithm. Since this method not only suppresses inter-carrier interference but also combines signals (LOs in FIG. 2) leaking into the adjacent carriers, as shown in FIG. 2, it is conceivable that the method improves the receiving sensitivity greater than the method described in Patent Document 1.

PRIOR ART DOCUMENT

PATENT DOCUMENT

Patent Document 1: WO2007/046503 (page 35, FIG. 1)

NON-PATENT DOCUMENT

Non-Patent Document 1: Mitsuru Nakayama, Masahiro Fujii, Makoto Itami, Koji Ito, "MMSE ICI canceller for OFDM Mobile Reception", Journal of the Institute of Image Information and Television Engineers, Vol. 58, No. 1, pp. 83-90 (page 87), 2004

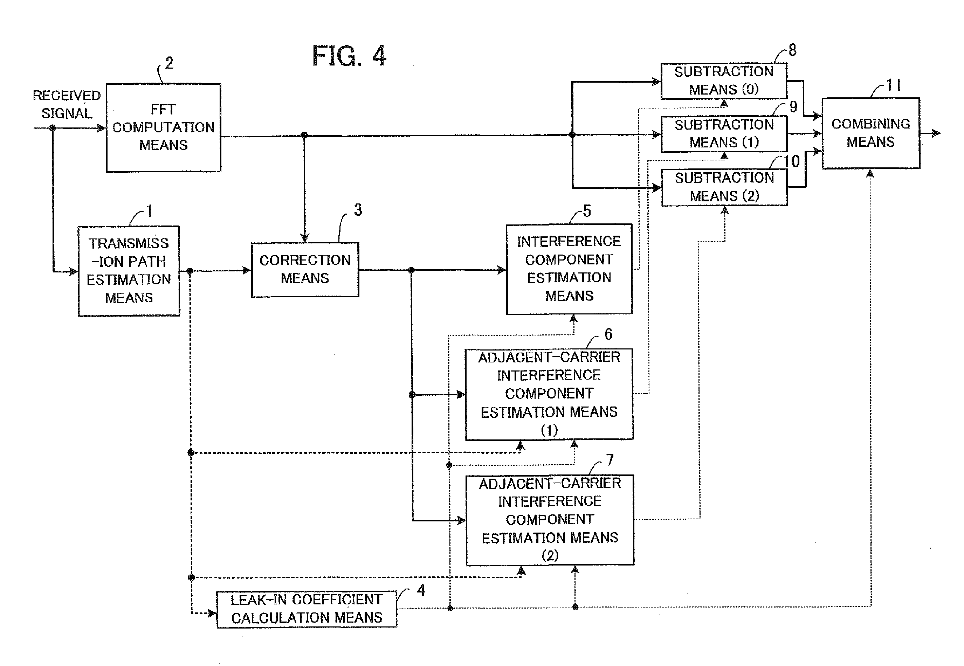

The article titled "Low Complexity Inter-Carrier Interference Compensation for Mobile Reception of DVB-T" by K. Schmidt et al., 9th International OFDM-Workshop 2004, Dresden (pages 72-76) discloses a low complexity ICI reduction scheme for OFDM with application to mobile DVB-T receivers. The data flow graph of the complete ICI reduction scheme of the described receiver model is illustrated in Fig. 4 of this article, and the output of the ICI reduction scheme is expressed in equation 12.

In the description below, reference is made to embodiments. However, these embodiments are not necessarily embodiments of the features recited in the appended claims.

SUMMARY OF THE INVENTION

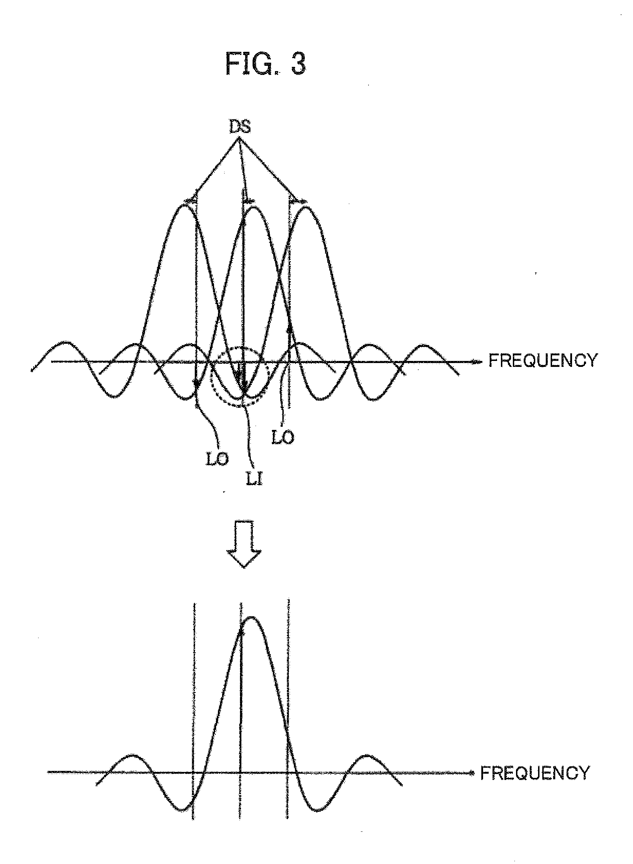

Although the inter-carrier interference cancellation method described in Patent Document 1 is a method for eliminating a leak-in component (LI in FIG. 3) from an adjacent carrier, as shown in FIG. 3, there is a problem that the method also eliminates leak-out components (LOs in FIG. 3) into the adjacent carriers, lowering the receiving sensitivity.

In contrast to this, the inter-carrier interference cancellation method described in Non-Patent Document 1 combines the leak-out components {LOs in FIG. 2) into the adjacent carriers, as shown in Fig. 2, and consequently provides a higher receiving sensitivity than the method described in Patent Document 1. However, since the intercarrier interference cancellation method requires calculation of an inverse matrix of a matrix with 11 rows and 11 columns for each carrier in weighted coefficient calculation by the MMSE algorithm, there is a problem that the amount of calculation is large.

The present invention is provided to solve the problems of the conventional technologies described above, and its object is to provide a receiving device and a receiving method that can correct a Doppler shift by a small amount of calculation and can improve receiving sensitivity.

The present invention provides a receiving device as set out in each of Claims 1, 5, 11 and 12, and a receiving method as set out in each of Claims 6 and 10. Optional features are set out in the remaining claims.

A receiving device according to one embodiment of the present invention for receiving a signal obtained by inserting a known signal into a signal obtained by frequency-multiplexing a plurality of carriers used to send transmission data, at given intervals on the time axis or a signal obtained by frequency-multiplexing by assigning a known pilot carrier to a plurality of given carriers among carriers used to send transmission data, the receiving device including: a transmission path estimation means for estimating a transmission path property from the known signal or the known pilot carrier included in the received signal, thereby outputting a signal of estimation result of the transmission path property; an FFT computation means for transforming the received signal to a frequency domain, thereby outputting a signal of the frequency domain; a correction means for correcting distortion of the signal of the frequency domain output from the FFT computation means on the basis of the signal of estimation result of the transmission path property output from the transmission path estimation means; a leak-in coefficient calculation means for calculating an inter-carrier interference leak-in coefficient on the basis of the signal of estimation result of the transmission path property output from the transmission path estimation means, thereby outputting a signal indicating the leak-in coefficient; an interference component estimation means for estimating an interference component included in the carrier to be demodulated, on the basis of the signal indicating the leak-in coefficient output from the leak-in coefficient calculation means and the corrected signal of the frequency domain output from the correction means; a first subtraction means for obtaining a desired first signal component included in the carrier to be demodulated, by subtracting the interference component estimated by the interference component estimation means from the signal of the frequency domain output from the FFT computation means; a signal component estimation means for estimating a desired second signal component included in a plurality of carriers other than the carrier to be demodulated, on the basis of the signal of the frequency domain output from the FFT computation means, the signal of estimation result of the transmission path property output from the transmission path estimation means, the signal indicating the leak-in coefficient output from the leak-in coefficient calculation means, and the corrected signal of the frequency domain output from the correction means; and a combining means for combining the first signal component output from the first subtraction means and the second signal component output from the signal component estimation means.

A receiving device according to another embodiment of the present invention receives a signal obtained by inserting a known signal into a signal obtained by frequency-multiplexing a plurality of carriers used to send transmission data, at given intervals on the time axis, or a signal obtained by frequency-multiplexing by assigning a known pilot carrier to a plurality of given carriers among carriers used to send transmission data, by using a plurality of antennas, and the receiving device includes a plurality of demodulation means corresponding respectively to the plurality of antennas, a plurality of Doppler shift correction means corresponding respectively to the plurality of demodulation means, a first combining means for combining signals output from the plurality of demodulation means, and a second combining means for combining signals output from the plurality of Doppler shift correction means, each of the plurality of demodulation means comprising a transmission path estimation means for estimating a transmission path property from the known signal or the pilot carrier included in the received signal, thereby outputting a signal of estimation result of the transmission path property; and an FFT computation means for transforming the received signal to the frequency domain, thereby outputting a signal of the frequency domain; the first combining means combining the signals of the frequency domain output from the FFT computation means, on the basis of the signal of estimation result of the transmission path property output from the transmission path estimation means included in each of the plurality of demodulation means; each of the plurality of Doppler shift correction means comprising a leak-in coefficient calculation means for calculating an inter-carrier interference leak-in coefficient on the basis of the signal of estimation result of the transmission path property output from the transmission path estimation means included in the corresponding demodulation means of the plurality of demodulation means, thereby outputting a signal indicating the leak-in coefficient; an interference component estimation means for estimating an interference component included in the carrier to be demodulated, on the basis of the signal indicating the leak-in coefficient output from the leak-in coefficient calculation means, and the signal output from the first combining means; a subtraction means for obtaining a desired signal component included in the carrier to be demodulated, by subtracting the interference component signal estimated by the interference component estimation means from the signal of the frequency domain output from the FFT computation means included in the corresponding demodulation means; a signal component estimation means for estimating a desired signal component included in a plurality of carriers other than the carrier to be demodulate, on the basis of the signal of the frequency domain output from the FFT computation means included in the corresponding demodulation means, the signal of estimation result of the transmission path property output from the transmission path estimation means, the signal indicating the leak-in coefficient output from the leak-in coefficient calculation means, and the signal output from the first combining means; and a third combining means for combining the signal output from the subtraction means and the signal output from the signal component estimation means; the second combining means combining signals output from the third combining means included in the plurality of Doppler shift correction means, on the basis of signals of estimation results of the transmission path property output from the transmission path estimation means included in each of the plurality of demodulation means.

A receiving device according to a further embodiment of the present invention receives a signal obtained by inserting a known signal into a signal obtained by frequency-multiplexing a plurality of carriers used to send transmission data, at given intervals on the time axis, or a signal obtained by frequency-multiplexing by assigning a known pilot carrier to a plurality of given carriers among carriers used to send transmission data, and the receiving device comprises a transmission path estimation means for estimating a transmission path property from the known signal or the pilot carrier included in the received signal, thereby outputting a signal of estimation result of the transmission path property; an FFT computation means for transforming the received signal to a frequency domain, thereby outputting a signal of the frequency domain; a correction means for correcting distortion of the signal of the frequency domain output from the FFT computation means, on the basis of the signal of estimation result of the transmission path property output from the transmission path estimation means; a second leak-in coefficient calculation means for calculating an inter-carrier interference leak-in coefficient, on the basis of the signal of estimation result of the transmission path property output from the transmission path estimation means and FFT window position information in the FFT computation means, thereby outputting a signal indicating the leak-in coefficient; an interference component estimation means for estimating an interference component included in the carrier to be demodulated, on the basis of the signal indicating the leak-in coefficient, output from the second leak-in coefficient calculation means, and the corrected signal of the frequency domain output from the correction means; a first subtraction means for obtaining a desired first signal component included in the carrier to be demodulated, by subtracting the interference component estimated by the interference component estimation means from the signal of the frequency domain output from the FFT computation means; a signal component estimation means for estimating a desired second signal component included in a plurality of carriers other than the carrier to be demodulated, on the basis of the signal of the frequency domain output from the FFT computation means, the signal of estimation result of the transmission path property output from the transmission path estimation means, the signal indicating the leak-in coefficient, output from the second leak-in coefficient calculation means, and the corrected signal of the frequency domain output from the correction means; and a combining means for combining the first signal component output from the first subtraction means and the second signal component output from the signal component estimation means.

A receiving device according a further embodiment of the present invention receives a signal obtained by inserting a known signal into a signal obtained by frequency-multiplexing a plurality of carriers used to send transmission data, at given intervals on the time axis, or a signal obtained by frequency-multiplexing by assigning a known pilot carrier to a plurality of given carriers among carriers used to send transmission data, and the receiving device comprises a transmission path estimation means for estimating a transmission path property from the known signal or the pilot carrier included in the received signal, thereby outputting a signal of estimation result of the transmission path property; an FFT computation means for transforming the received signal to a frequency domain, thereby outputting a signal of the frequency domain; a correction means for correcting distortion of the signal of the frequency domain output from the FFT computation means, on the basis of the signal of estimation result of the transmission path property output from the transmission path estimation means; an FFT window position detection means for detecting an FFT window position in the FFT computation means, on the basis of the signal of estimation result of the transmission path property output from the transmission path estimation means, thereby outputting FFT window position information; a second leak-in coefficient calculation means for calculating an inter-carrier interference leak-in coefficient, on the basis of the signal of estimation result of the transmission path property output from the transmission path estimation means and the FFT window position information, thereby outputting a signal indicating the leak-in coefficient; an interference component estimation means for estimating an interference component included in the carrier to be demodulated, on the basis of the signal indicating the leak-in coefficient output from the leak-in coefficient calculation means, and the corrected signal of the frequency domain output from the correction means; a first subtraction means for obtaining a desired first signal component included in the carrier to be demodulated, by subtracting the interference component estimated by the interference component estimation means from the signal of the frequency domain output from the FFT computation means; a signal component estimation means for estimating a desired second signal component included in a plurality of carriers other than the carrier to be demodulated, on the basis of the signal of the frequency domain output from the FFT computation means, the signal of estimation result of the transmission path property output from the transmission path estimation means, the signal indicating the leak-in coefficient output from the leak-in coefficient calculation means, and the corrected signal of the frequency domain output from the correction means; and a combining means for combining the first signal component output from the first subtraction means and the second signal component output from the signal component estimation means.

A receiving device and a receiving method according to embodiments of the present invention estimate desired signals included in a carrier to be demodulated and a plurality of other carries by a small amount of calculation and combine them, thereby correcting a Doppler shift and improving the receiving sensitivity.

A receiving device and a receiving method according to another embodiment of the present invention estimate desired signals included in a carrier to be demodulated and a plurality of other carries by a small amount of calculation and combines them, thereby correcting a Doppler shift and improving the receiving sensitivity, even if the FFT window position in FFT computation required for demodulation has changed.

## BRIEF DESCRIPTION OF THE DRAWINGS

FIGs. 1A and 1B are explanatory diagrams about intercarrier interference;
FIG. 2 is an explanatory diagram illustrating the combination of signals leaking into adjacent carriers in Non-Patent Document 1;
FIG. 3 is an explanatory diagram illustrating intercarrier interference cancellation in Patent Document 1;
FIG. 4 is a block diagram schematically showing structure of a receiving device according to a first embodiment;
FIG. 5 is a diagram showing structure of a transmission signal in the first embodiment;
FIG. 6 is a schematic diagram illustrating delay profile estimation using PN sequence correlation property in the first embodiment;
FIG. 7 is a diagram showing structure of the transmission signal in the first embodiment;
FIGs. 8A and 8B are diagrams illustrating an interpolation process in the first embodiment;
FIG. 9 is a block diagram schematically showing structure of a leak-in coefficient calculation means in the first embodiment;
FIG. 10 is a diagram showing a signal component leaking into an adjacent carrier on the right in the first embodiment;
FIG. 11 is a diagram showing a signal component leaking into an adjacent carrier on the left in the first embodiment;
FIG. 12 is a block diagram schematically showing structure of a receiving device according to a second embodiment;
FIG. 13 is a diagram showing the arrangement of signal points of the transmission signal in the second embodiment;
FIG. 14 is a diagram showing the signal points of transmission and reception in the second embodiment;
FIGs. 15A and 15B are diagrams concerning a method of determining a weighting coefficient in the second embodiment;
FIG. 16 is a block diagram schematically showing structure of a receiving device according to a third embodiment;
FIG. 17 is a block diagram schematically showing structure of a receiving device according to a fourth embodiment;
FIG. 18 is a block diagram schematically showing structure of a demodulation means in the fourth embodiment;
FIG. 19 is a block diagram schematically showing structure of a Doppler shift correction means in the fourth embodiment;
FIG. 20 is a block diagram schematically showing structure of a demodulation means in a fifth embodiment;
FIG. 21 is a block diagram schematically showing an example of structure of a second leak-in coefficient calculation means shown in FIG. 20;
FIG. 22 is a block diagram schematically showing structure of a demodulation means in a sixth embodiment; and
FIG. 23 is a block diagram schematically showing an example of structure of an FFT window position detection means shown in FIG. 22.

## DESCRIPTION OF EMBODIMENTS

First Embodiment

In order to describe an outline of a receiving device and a receiving method according to a first embodiment of the present invention, carriers of received signals are expressed by the following equations 1 (each of the equations is expressed as equation 1-1, equation 1-2, equation 1-3 and equation 1-4).

$$y = H \cdot x \qquad\qquad \text{Equation 1-1}$$

$$y = [y_1, \cdots, y_N]^T \qquad\qquad \text{Equation 1-2}$$

$$x = [x_1, \cdots, x_N]^T \qquad\qquad \text{Equation 1-3}$$

$$H = \begin{bmatrix} h_{1,1} & \cdots & \cdots & h_{1,N} \\ \vdots & h_{2,2} & & \vdots \\ \vdots & & \ddots & \vdots \\ h_{N,1} & \cdots & \cdots & h_{N,N} \end{bmatrix} \qquad\qquad \text{Equation 1-4}$$

In the equations, $y_n$ represents an n-th carrier of the received signal; $x_n$ represents an n-th carrier of a transmission signal; H is a matrix representing a transmission path, including elements of i rows and j columns (i j); $h_{i,j}$ represents a leak-in coefficient from a j-th carrier to an i-th carrier; and an on-diagonal element $h_{i,i}$ represents a transmission path property acting on the i-th carrier, where

n = 1, 2, ... , N
i = 1, 2, ..., N
j = 1, 2, ..., N.

From the equation 1, an n-th subcarrier $y_n$ of the received signal is expressed by equation 2 below.

$$y_n = h_{n,n} x_n + \sum_{i=1, i \neq n}^{N} h_{n,i} x_i \qquad\qquad \text{Equation 2}$$

In the equation 2, a first term on a right side represents a signal component transmitted by the n-th carrier, and a second term on the right side represents interference components from adjacent carriers.

Furthermore, from the equation 1, an n+1-th carrier $y_{n+1}$ of the received signal is expressed by equation 3 below.

$$y_{n+1} = h_{n+1,n} x_n + \sum_{i=1, i \neq n}^{N} h_{n+1,i} x_i \qquad\qquad \text{Equation 3}$$

In the equation 3, a first term on a right side is a signal component leaking from a signal transmitted by the n-th carrier to the n+1-th carrier, and a second term on the right side represents the other interference components.

Similarly, an n-1-th carrier $y_{n-1}$ of the received signal is expressed by equation 4 below.

$$y_{n-1} = h_{n-1,n} x_n + \sum_{i=1, i \neq n}^{N} h_{n-1,i} x_i \qquad\qquad \text{Equation 4}$$

In the equation 4, a first term on a right side represents a signal component leaking from the signal $x_n$ transmitted by the n-th carrier to the n-1-th carrier, and a second term on the right side represents the other interference components.

The inter-carrier interference cancellation method described in Patent Document 1 estimates the interference components represented by the second term on the right side of the equation 2, from the received signal, and eliminates the estimated interference components, thereby eliminating the leak-in components from the adjacent carriers. In contrast to this, the receiving device and the receiving method according to the first embodiment are characterized in that the second term on the right side of the equation 2, the second term on the right side of the equation 3, and the second term on the right side of the equation 4 are individually from the received signal, the estimated interference components are eliminated, and thereafter the signal components, the interference components of which have been eliminated, are combined.

FIG. 4 is a block diagram schematically showing structure of the receiving device according to the first embodiment. As shown in FIG. 4, the receiving device according to the first embodiment includes a transmission path estimation means 1 for estimating the transmission path property from a known signal included in the received signal, an FFT computation means 2 for transforming the received signal to a frequency domain, a correction means 3 for correcting distortion in the received signal, a leak-in coefficient calculation means 4 for calculating an inter-carrier interference leak-in coefficient, an interference component estimation means 5 for estimating an interference component included in each carrier, an adjacent-carrier interference component estimation means (1) 6 for estimating an interference component other than the signal component leaking into an adjacent carrier on the right, and an adjacent-carrier interference component estimation means (2) 7 for estimating an interference component other than the signal component leaking into an adjacent carrier on the left. The adjacent-carrier interference component estimation means (1) 6 and the adjacent-carrier interference component estimation means (2) 7 function as an unwanted component estimation means for estimating an unwanted component other than the signal component transmitted by the carrier to be demodulated among a plurality of carriers other than the carrier to be demodulated, on the basis of the signals output from the transmission path estimation means 1, the leak-in coefficient calculation means 4, and the correction means 3. The receiving device according to the first embodiment further includes a subtraction means (0) 8 for subtracting the interference component from each carrier of the received signal, a subtraction means (1) 9 for subtracting the interference component other than the signal component leaking from an adjacent carrier on the left of each carrier of the received signal, a subtraction means (2) 10 for subtracting the interference component other than the signal component leaking from an adjacent carrier on the right of each carrier of the received signal, and a combination means 11 for combining the signals output from the subtraction means (0) 8, the subtraction means (1) 9, and the subtraction means (2) 10. The unwanted component estimation means and a second subtraction means (subtraction means (1) 9 and subtraction means (2) 10) for subtracting the signal output from the unwanted component estimation means from the signal output from the FFT computation means 2 function as a signal component estimation means for estimating a desired signal component included in a plurality of carriers other than the carrier to be demodulated, on the basis of the signal of the frequency domain output from the FFT computation means 2, the signal of estimation result of the transmission path property output from the transmission path estimation means 1, the signal indicating the leak-in coefficient output from the leak-in coefficient calculation means 4, and the corrected signal of the frequency domain output from the correction means 3.

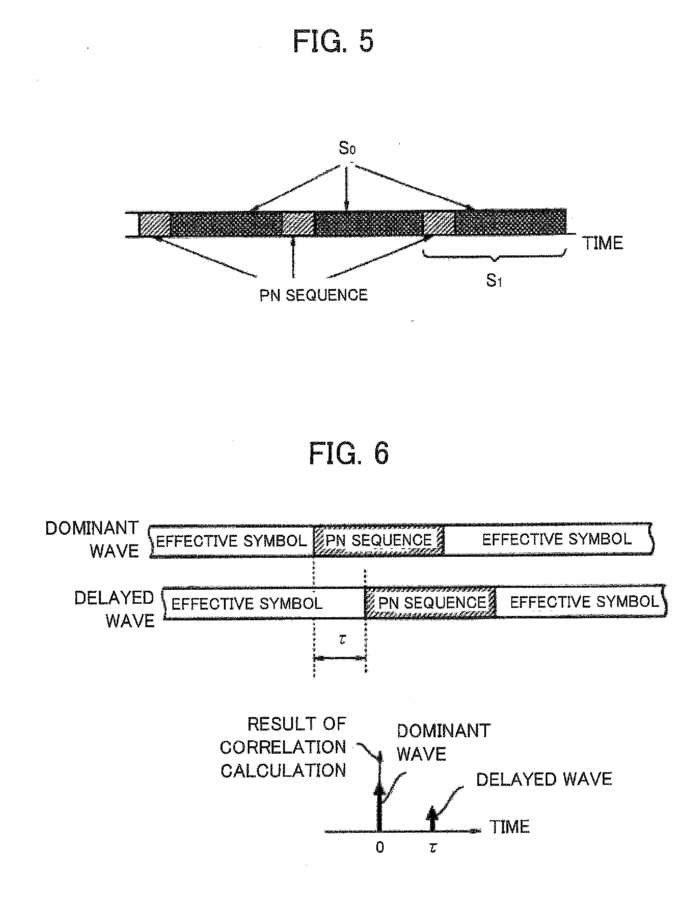

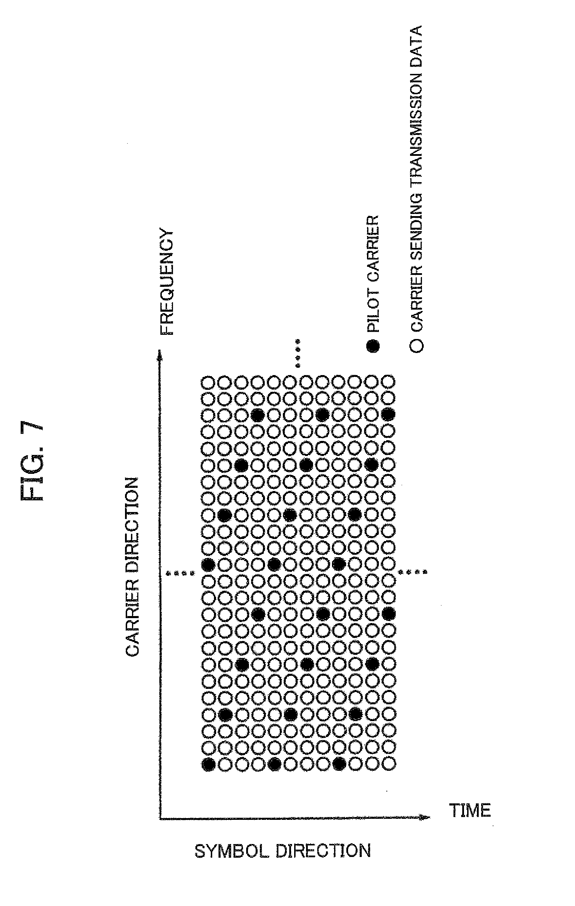

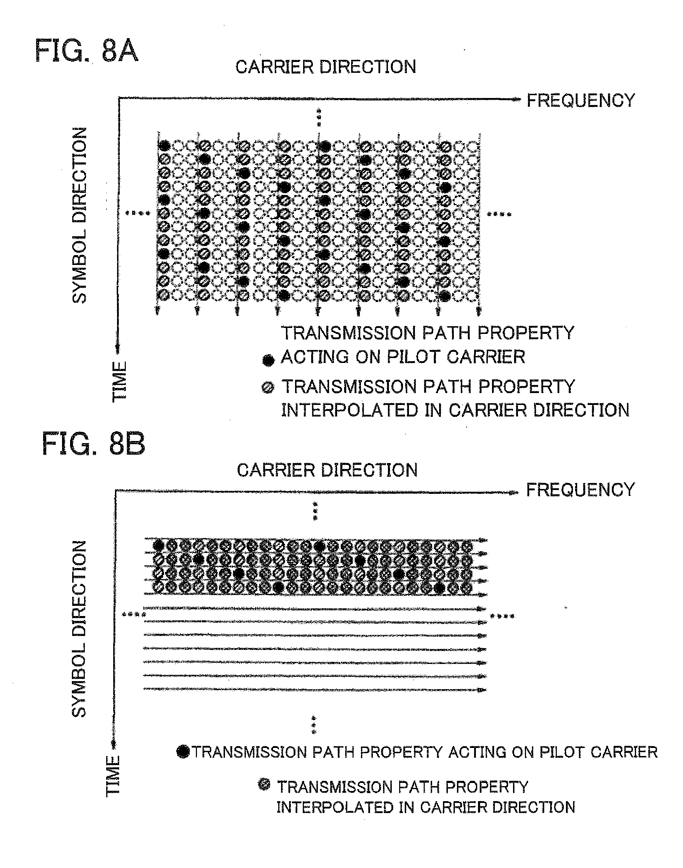

In the first embodiment, a description will be made as to a case where a signal transmitted in units of transmission symbols $S_1$ including a significant symbol So generated from the transmission data with a PN sequence (pseudorandom sequence) added prior to it (FIG. 5, FIG. 6) is received or a case where a signal obtained by frequency-multiplexing, in which a known pilot carrier is assigned to a plurality of given carriers among the carriers used to send the transmission data is received (FIG. 7, FIGs.8A and 8B).

The transmission path estimation means 1 in FIG. 4 estimates the transmission path property from a known signal. Estimation methods of the transmission path property are different depending on whether the known signal is a PN sequence or a pilot carrier. Next, each of the estimation methods will be described.

First, the method of estimating the transmission path property from the PN sequence will be described. It is generally known that the PN sequence has a strong correlation property. The transmission path estimation means 1 first calculates a correlation between the received signal and a known PN sequence prepared beforehand (in a storage means which is not shown in the drawings) in the receiver. FIG. 6 shows a result of a correlation calculation in a transmission path of a two-ray ground reflection model. As shown in FIG. 6, when the PN sequence included in a dominant wave agrees with the PN sequence prepared by the receiver, a correlation peak corresponding to the dominant wave is output; when the PN sequence included in the delayed wave agrees with the PN sequence prepared by the receiver, a correlation peak corresponding to the delayed wave is output. These correlation peaks are complex values representing amplitude and phase of the dominant wave and the delayed wave respectively. The transmission path estimation means 1 obtains the estimation result of the transmission path property acting on each carrier by transforming the results of correlation to the frequency domain.

Next, the method of estimating a transmission path property from the pilot carrier will be described. The transmission path estimation means 1 first transforms the received signal to the frequency domain, extracts a pilot carrier, and compares it with the pilot carrier prepared beforehand (in a storage means which is not shown in the drawings) by the receiver, thereby estimating the transmission path property acting on the pilot carrier. As shown in FIGs. 8A and 8B, the transmission path properties acting on all the carriers are estimated by interpolating the transmission path property acting on the pilot carrier in a symbol direction and in a carrier direction.

Let the transmission path property estimated by either of the methods described above be

$$\hat{h}_{n,n}$$

where n = 1, 2, ..., N. This

$$\hat{h}_{n,n}$$

is an estimated value of the on-diagonal element $h_{n,n}$ of the matrix H in the equation 1. A diagonal matrix having

$$\hat{h}_{n,n}$$

as an on-diagonal element is defined as given by equation 5 below.

$$D = \begin{bmatrix} \hat{h}_{1,1} & 0 & \cdots & 0 \\ 0 & \hat{h}_{2,2} & \ddots & \vdots \\ \vdots & \ddots & \ddots & 0 \\ 0 & \cdots & 0 & \hat{h}_{N,N} \end{bmatrix}$$

Equation 5

The FFT computation means 2 in FIG. 4 obtains $y_n$ (n = 1, 2, ..., N) by transforming the received signal to the frequency domain. This $y_n$ is the n-th carrier of the received signal and is an n-th element of a vector y representing the received signal of the equation 1.

The correction means 3 in FIG. 4 corrects distortion of the signal output from the FFT computation means 2 in accordance with the signal output from the transmission path estimation means 1. More specifically, the correction means 3 divides the n-th carrier $y_{n,n}$ of the received signal by an estimation result of the transmission path property

$$\hat{h}_{n,n}$$

acting on the n-th carrier. Based on the equation 2, the result of the division is expressed by equation 6 given below.

$$\hat{x}_n = \frac{h_{n,n}}{\hat{h}_{n,n}} x_n + \frac{\displaystyle\sum_{i=1,i\neq n}^{N} h_{n,i} x_i}{\hat{h}_{n,n}}$$

Equation 6

In this connection, it is assumed that the estimated value output from the transmission path estimation means 1 is correct. Then,

$$\hat{h}_{n,n} = h_{n,n}$$

A first term on a right side of the equation 6 is the signal transmitted by the n-th carrier of the transmission signal, and a second term on the right side is an error component caused by leakage from the adjacent carriers.

The leak-in coefficient calculation means 4 in FIG. 4 executes calculation that is similar to calculation in the method described in Patent Document 1. The leak-in coefficient calculation means 4 will be described briefly below.

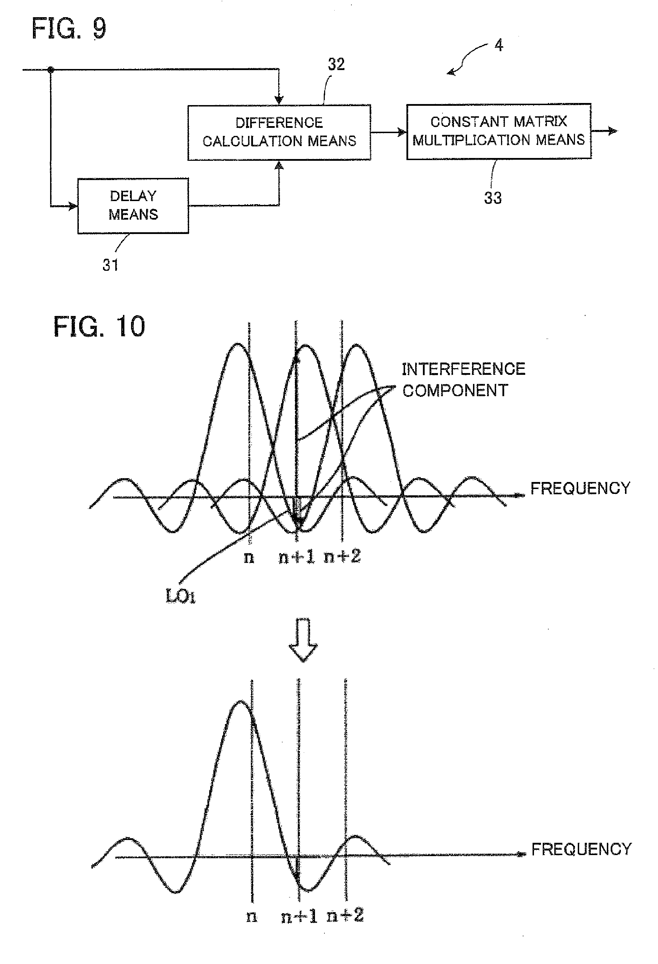

FIG. 9 is a block diagram schematically showing structure of the leak-in coefficient calculation means 4. As shown in FIG. 9, the leak-in coefficient calculation means 4 includes a delay means 31 for delaying the signal output from the transmission path estimation means 1 by two symbol intervals, a difference calculation means 32 for calculating a difference in estimation results of transmission path among symbols, for each carrier, and a constant matrix multiplication means 33 for multiplying the results of calculation by the difference calculation means by a constant matrix.

The difference calculation means 32 in FIG. 9 calculates a difference between signals having the same carrier numbers in different symbols. For example, let the transmission path property acting on the n-th carrier of the m+1-th symbol be

$$\hat{h}_{n,n}^{m+1},$$

and the transmission path property acting on the n-th carrier of the m-1-th symbol be

$$\hat{h}_{n,n}^{m-1}.$$

Then, a result of the difference calculation is obtained by

$$\Delta\hat{h}_{n,n} = \hat{h}_{n,n}^{m+1} - \hat{h}_{n,n}^{m-1}.$$

In this connection, a matrix H having the calculated difference as a diagonal component is defined as given by equation 7 below.

$$\Delta H = \begin{bmatrix} \Delta\hat{h}_{1,1} & 0 & \cdots & 0 \\ 0 & \Delta\hat{h}_{2,2} & \ddots & \vdots \\ \vdots & \ddots & \ddots & 0 \\ 0 & \cdots & 0 & \Delta\hat{h}_{N,N} \end{bmatrix} \qquad \text{Equation 7}$$

The constant matrix multiplication means 33 in FIG. 9 multiplies H defined by the equation 7 by a constant matrix

$$\Xi$$

expressed by equation 8 below.

$$\Xi = \begin{bmatrix} 0 & \zeta_1 & \cdots & \zeta_{N-1} \\ \zeta_{-1} & 0 & \cdots & \zeta_{N-2} \\ \vdots & \vdots & \ddots & \vdots \\ \zeta_{1-N} & \zeta_{2-N} & \cdots & 0 \end{bmatrix} \qquad \text{Equation 8}$$

$$\zeta_n = -\frac{1}{2} - \frac{j}{2\tan(\pi n / N)}$$

The result obtained by multiplying H of the equation 7 by the constant matrix

$$\Xi$$

of the equation 8 is expressed by equation 9 below.

$$K = \Xi \cdot \Delta H$$

$$K = \begin{bmatrix} 0 & \hat{h}_{1,2} & \cdots & \cdots & & \hat{h}_{1,N} \\ \hat{h}_{2,1} & 0 & \hat{h}_{2,3} & & & \vdots \\ \vdots & \hat{h}_{3,2} & \ddots & \ddots & & \vdots \\ \vdots & & & \ddots & \ddots & \hat{h}_{N-1,N} \\ \hat{h}_{N,1} & \cdots & \cdots & \hat{h}_{N,N-1} & & 0 \end{bmatrix}$$

Equation 9

The element

$$\hat{h}_{i,j}$$

of the matrix K given by the equation 9 in the i-th row and the j-th column (i j) becomes the estimated value of the element $h_{i,j}$ of the matrix H representing the transmission path property of the equation 1 in the i-th row and the j-th column (i j). The leak-in coefficient calculation means 4 in FIG. 4 calculates and outputs the matrix K expressed by the equation 9.

Now, if the leak-in coefficient calculation means 4 in FIG. 4 considers just a component leaking into L adjacent carriers, the constant matrix can be simplified as given by equation 10 below.

$$\Xi = \begin{bmatrix} 0 & \zeta_1 & \cdots & \zeta_L & 0 & 0 \\ \zeta_{-1} & 0 & \ddots & & \ddots & 0 \\ \vdots & \ddots & \ddots & \ddots & & \zeta_L \\ \zeta_{-L} & & \ddots & \ddots & \ddots & \vdots \\ 0 & \ddots & & \ddots & \ddots & \zeta_1 \\ 0 & 0 & \zeta_{-L} & \cdots & \zeta_{-1} & 0 \end{bmatrix}$$

Equation 10

Consequently, the amount of computation can be reduced.

Although the multiplication of the matrix given by the equation 9 is needed to obtain the leak-in coefficient, as described above, the computation of the equation 9 means the multiplication of a fixed value $\zeta_l$ (I = -L to L) prepared beforehand by the receiver by

$$\Delta \hat{h}_{n,n}$$

(n = 1, 2, ..., N) in each carrier, and the amount of computation is far smaller than the amount of computation of the inverse matrix in Non-Patent Document 1.

The interference component estimation means 5 in FIG. 4 estimates the interference component included in each carrier on the basis of the signal output from the correction means 3 and the signal output from the leak-in coefficient calculation means 4. Letting the output of the correction means 3 given by the equation 6 be

$$\hat{x} = [\hat{x}_1, \hat{x}_2, \cdots, \hat{x}_N]^T .$$

The interference component estimation means 5 performs calculation as expressed by equation 11 below.

$$c = K \cdot \hat{x}$$

$$= \begin{bmatrix} 0 & \hat{h}_{1,2} & \cdots & \cdots & & \hat{h}_{1,N} \\ \hat{h}_{2,1} & 0 & \hat{h}_{2,3} & & & \vdots \\ \vdots & \hat{h}_{3,2} & \ddots & \ddots & & \vdots \\ \vdots & & \ddots & \ddots & \hat{h}_{N-1,N} & \vdots \\ \hat{h}_{N,1} & \cdots & \cdots & \hat{h}_{N,N-1} & 0 \end{bmatrix} \begin{bmatrix} \hat{x}_1 \\ \hat{x}_2 \\ \vdots \\ \vdots \\ \hat{x}_N \end{bmatrix} \qquad \text{Equation 11}$$

The n-th element of the vector

$$c = [c_1, c_2, \cdots, c_N]$$

in the equation 11 is expressed by equation 12 below.

$$c_n = \sum_{i=1, i \neq n}^{N} \hat{h}_{n,i} \hat{x}_i \qquad \text{Equation 12}$$

The component expressed by the equation 12 indicates the total sum of the estimated values of the leak-in components from the adjacent carriers.

The subtraction means (0) 8 in FIG. 4 obtains the signal expressed by equation 13 below by subtracting the estimated interference component $c_n$ expressed by the equation 12 from the n-th carrier $y_n$ of the received signal expressed by the equation 2.

$$y_n - c_n = h_{n,n} x_n + \sum_{i=1, i \neq n}^{N} h_{n,i} x_i - \sum_{i=1, i \neq n}^{N} \hat{h}_{n,i} \hat{x}_i \qquad \text{Equation 13}$$

Here, the assumption that the estimation result of the leak-in coefficient and the correction result of the received signal are correct gives

$$h_{n,i} = \hat{h}_{n,i}$$

$$x_i = \ddot{x}_i .$$

This causes a second term on a right side of the equation 13 and a third term on the right side to cancel out each other, consequently eliminating the inter-carrier interference component.

The adjacent-carrier interference component estimation means 6 in FIG. 4 will be described by defining the matrix as given by equation 14 below on the basis of the equations 5 and 9.

$$H = D + K$$

$$= \begin{bmatrix} \hat{h}_{1,1} & \hat{h}_{1,2} & \cdots & \cdots & & \hat{h}_{1,N} \\ \hat{h}_{2,1} & \hat{h}_{2,2} & \hat{h}_{2,3} & & & \vdots \\ \vdots & \hat{h}_{3,2} & \ddots & \ddots & & \vdots \\ \vdots & & & \ddots & \ddots & \hat{h}_{N-1,N} \\ \hat{h}_{N,1} & \cdots & \cdots & & \hat{h}_{N,N-1} & \hat{h}_{N,N} \end{bmatrix} \qquad \text{Equation 14}$$

The element

$$\hat{h}_{i,j}$$

in the i-th row and the j-th column in the equation 14 is the estimated value of the element $h_{n,j}$ of the matrix H representing the transmission path property defined by the equation 1 in the i-th row and the j-th column.

The adjacent-carrier interference component estimation means (1) 6 in FIG. 4 first defines equation 15

$$G_{-1} = \begin{bmatrix} \hat{h}_{1,1} & \hat{h}_{1,2} & \cdots & & \cdots & \hat{h}_{1,N} \\ 0 & \hat{h}_{2,2} & \hat{h}_{2,3} & & & \vdots \\ \hat{h}_{3,1} & 0 & \ddots & & \ddots & \vdots \\ \vdots & & & \ddots & & \hat{h}_{N-1,N} \\ \hat{h}_{N,1} & \cdots & \hat{h}_{N,N-2} & 0 & \hat{h}_{N,N} \end{bmatrix} \qquad \text{Equation 15}$$

representing a matrix obtained by replacing an element of the i-th row and the i-1-th column of the matrix
$\hat{H}$
given by the equation 14 by 0.

The vector
$\hat{x}$
obtained by the correction means 3 is multiplied by this matrix, thereby obtaining equation 16 below.

$$p = G_{-1}\hat{x}$$

$$= \begin{bmatrix} \hat{h}_{1,1} & \hat{h}_{1,2} & \cdots & & \cdots & \hat{h}_{1,N} \\ 0 & \hat{h}_{2,2} & \hat{h}_{2,3} & & & \vdots \\ \hat{h}_{3,1} & 0 & \ddots & & \ddots & \vdots \\ \vdots & & & \ddots & & \hat{h}_{N-1,N} \\ \hat{h}_{N,1} & \cdots & \hat{h}_{N,N-2} & 0 & \hat{h}_{N,N} \end{bmatrix} \begin{bmatrix} \hat{x}_1 \\ \hat{x}_2 \\ \vdots \\ \vdots \\ \hat{x}_N \end{bmatrix} \qquad \text{Equation 16}$$

An n+1-th element of a vector

$$p = [p_1, p_2, \cdots, p_N]$$

in the equation 16 is expressed by equation 17 below.

$$p_{n+1} = \sum_{i=1, i \neq n}^{N} \hat{h}_{n+1,i} \hat{x}_i$$

Equation 17

The component expressed by the equation 17 is the sum of interference components other than the signal leaking from the n-th carrier to the n+1-th carrier, as shown in FIG. 10.

The subtraction means (1) 9 in FIG. 4 obtains the signal expressed by equation 18 below

$$y_{n+1} - p_{n+1} = h_{n+1,n} x_n + \sum_{i=1, i \neq n}^{N} h_{n+1,i} x_i - \sum_{i=1, i \neq n}^{N} \hat{h}_{n+1,i} \hat{x}_i$$

Equation 18

by subtracting the component expressed by the equation 17 from the n+1-th carrier $y_{n+1}$ of the received signal expressed by the equation 3.

It is assumed here that the estimation result of the leak-in coefficient and the correction result of the received signal are correct. This provides

$$h_{n,i} = \hat{h}_{n,i}$$

$$x_i = \hat{x}_i,$$

thereby causing the second term on the right side of the equation 18 and the third term on the right side to cancel out each other. Consequently, the signal component $LO_1$ leaking from the n-th carrier to the n+1-th carrier can be extracted as shown in FIG. 10.

Similarly, the adjacent-carrier interference component estimation means (2) 7 in FIG. 4 first defines equation 19 below

$$G_{+1} = \begin{bmatrix} \hat{h}_{1,1} & 0 & \cdots & \cdots & & \hat{h}_{1,N} \\ \hat{h}_{2,1} & \hat{h}_{2,2} & 0 & & & \vdots \\ \vdots & \hat{h}_{3,2} & \ddots & \ddots & & \vdots \\ \vdots & & & \ddots & \ddots & 0 \\ \hat{h}_{N,1} & \cdots & & \cdots & \hat{h}_{N,N-1} & \hat{h}_{N,N} \end{bmatrix}$$

Equation 19

which is the matrix obtained by replacing an element of the i-th row and the i+1-th column of the matrix
$\hat{H}$
given by the equation 14 by 0.

The vector
$\hat{x}$
obtained by the correction means 3 is multiplied by this matrix, thereby obtaining equation 20 below.

$$q = G_{+1}\hat{x}$$

$$= \begin{bmatrix} \hat{h}_{1,1} & 0 & \cdots & \cdots & & \hat{h}_{1,N} \\ \hat{h}_{2,1} & \hat{h}_{2,2} & 0 & & & \vdots \\ \vdots & \hat{h}_{3,2} & \ddots & \ddots & & \vdots \\ \vdots & & & \ddots & \ddots & 0 \\ \hat{h}_{N,1} & \cdots & & \cdots & \hat{h}_{N,N-1} & \hat{h}_{N,N} \end{bmatrix} \begin{bmatrix} \hat{x}_1 \\ \hat{x}_2 \\ \vdots \\ \vdots \\ \hat{x}_N \end{bmatrix}$$

Equation 20

An n-1-th element of a vector

$$q = [q_1, q_2, \cdots, q_N]$$

in the equation 20 is expressed by equation 21 below.

$$q_{n-1} = \sum_{i=1, i \neq n}^{N} \hat{h}_{n-1,i} \hat{x}_i$$

Equation 21

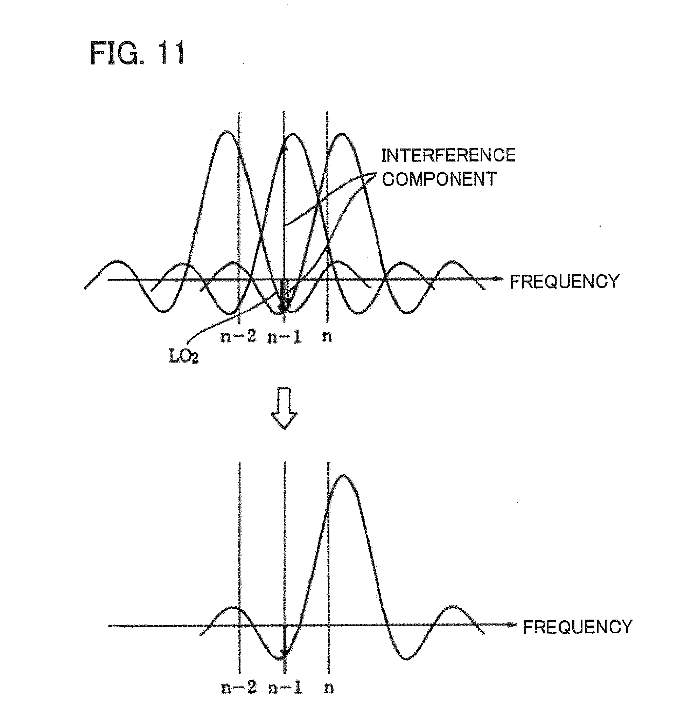

The component expressed by the equation 21 is the sum of interference components other than the signal component $LO_2$ leaking from the n-th carrier to the n-1-th carrier, as shown in FIG. 11.

The subtraction means (2) 10 in FIG. 4 obtains a signal expressed by equation 22 below

$$y_{n-1} - q_{n-1} = h_{n-1,n} x_n + \sum_{i=1, i \neq n}^{N} h_{n-1,i} x_i - \sum_{i=1, i \neq n}^{N} \hat{h}_{n-1,i} \hat{x}_i$$

Equation 22

by subtracting the estimation result of the interference component expressed by the equation 21 from the n-1-th carrier of the received signal expressed by the equation 4.

It is assumed here that the estimation result of the leak-in coefficient and the correction result of the received signal are correct. Since this provides the following:

$$h_{n,i} = \hat{h}_{n,i}$$

$$x_i = \hat{x}_i$$

causing the second term and the third term of the equation 22 to cancel out each other. Consequently, the signal leaking from the n-th carrier to the n-1-th carrier can be extracted as shown in FIG. 11.

The combining means 11 in FIG. 4 combines the signals output from the subtraction means (0) 8, the subtraction means (1) 9, and the subtraction means (2) 10. Letting the signals output from the subtraction means (0) 8, the subtraction means (1) 9, and the subtraction means (2) 10 be

$$h_{n,n} x_n, \quad h_{n+1,n} x_n, \quad h_{n-1,n} x_n$$

respectively, the result obtained by combining the signals is expressed by equation 23 below.

$$\tilde{x}_n = \frac{1}{\left|\hat{h}_{n,n}\right|^2 + \left|\hat{h}_{n+1,n}\right|^2 + \left|\hat{h}_{n-1,n}\right|^2}\left(\hat{h}^*_{n,n}\cdot h_{n,n}x_n + \hat{h}^*_{n+1,n}\cdot h_{n+1,n}x_n + \hat{h}^*_{n-1,n}\cdot h_{n-1,n}x_n\right)$$

$$\text{Equation 23}$$

The outputs from the subtraction means (0) 8, the subtraction means (1) 9, and the subtraction means (2) 10 are multiplied by the corresponding estimation result of the transmission path property and the complex conjugate of the estimation result of the leak-in coefficients

$$\hat{h}^*_{n,n}, \quad \hat{h}^*_{n+1,n}, \quad \hat{h}^*_{n-1,n}$$

respectively as given by the equation 23, and then divided by

$$\left|\hat{h}_{n,n}\right|^2 + \left|\hat{h}_{n+1,n}\right|^2 + \left|\hat{h}_{n-1,n}\right|^2$$

for normalization.

As described above, the receiving device and the receiving method according to the first embodiment can correct the Doppler shift and can improve the receiving sensitivity by extracting the individual components leaking into the adjacent carriers and combining them. Unlike Non-Patent Document 1, this process does not require the inverse matrix computation, and consequently can correct the Doppler shift by a small amount of computation.

Second Embodiment

The equation 11 in the first embodiment indicates that if accuracy of the corrected signal $\hat{x}$ is low, the inter-carrier interference estimation error becomes large, making it impossible to suppress the inter-carrier interference sufficiently. In a second embodiment, the inter-carrier interference estimation error is reduced by multiplying a signal having a low signal-to-noise power ratio by a small weighting coefficient.

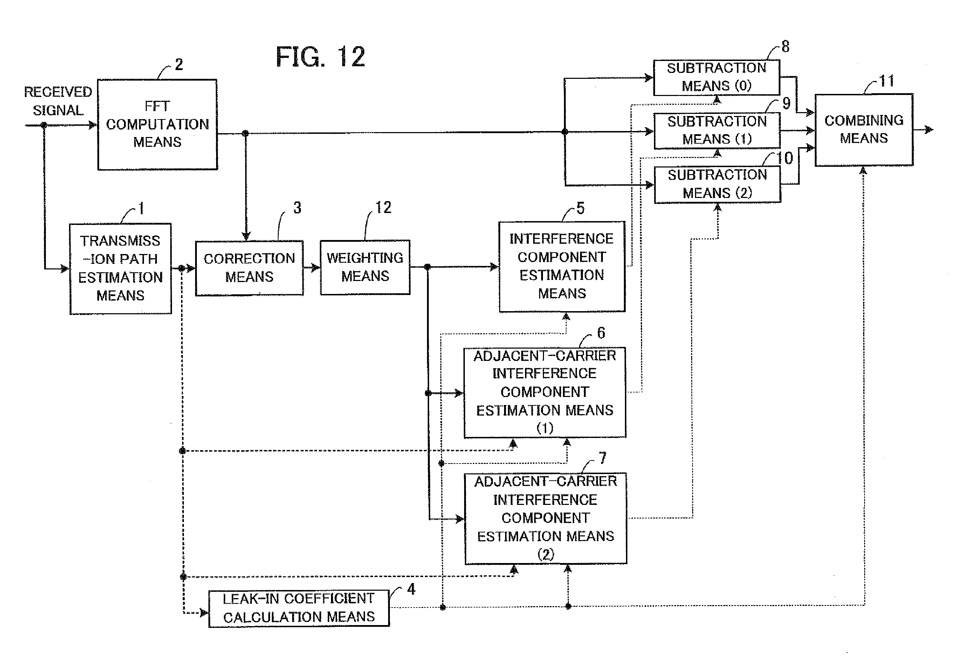

FIG. 12 is a block diagram schematically showing structure of a receiving device according to the second embodiment. In FIG. 12, elements identical to or corresponding to the elements in FIG. 4 (first embodiment) will be denoted by the same reference numerals. The receiving device shown in FIG. 12 differs from the receiving device shown in FIG. 4 in that a weighting means 12 is included. The weighting means 12 will be described mainly.

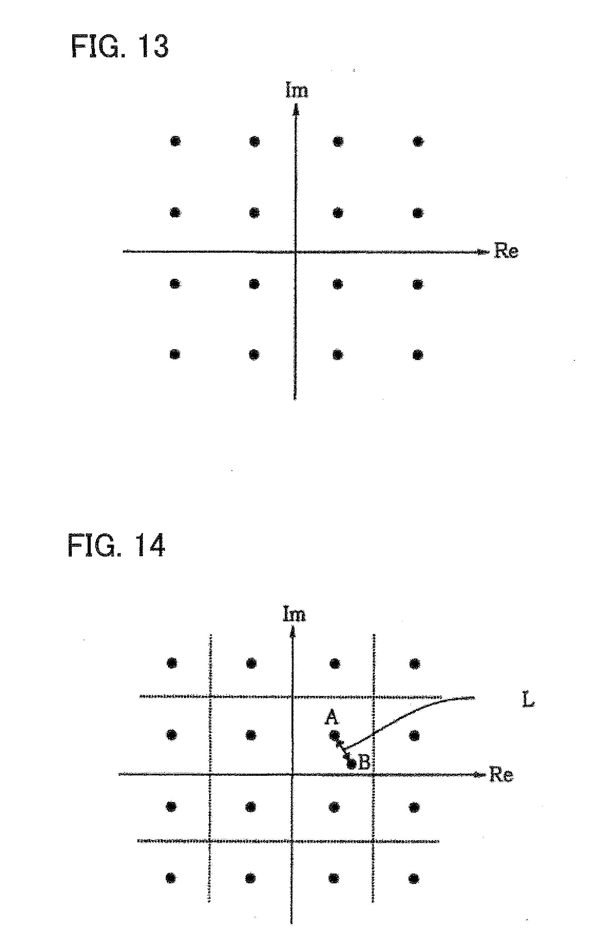

A signal transmitted by carriers of a transmission signal in the second embodiment is a complex signal obtained by multi-value digital modulation. For example, transmission information is modulated by addressing four bits of transmission information to each of the sixteen signal points as shown in FIG. 13, and the receiving device receives the transmission signal with noise added. If a signal point A in FIG. 14 is sent, for example, the signal point of the signal output from the correction means 3 in FIG. 12 is affected by noise and becomes a point B in FIG. 14. As shown in FIG. 14, the receiving device generally makes grid like partitions each containing a signal point of the transmission signal at its center, detects the partition containing the signal point of the signal output from the correction means 3, and judges that the transmission information is sent at the signal point corresponding the partition. This is called a hard decision.

If the signal-to-noise power ratio is high, the signal point of the signal output from the correction means 3 is in the vicinity of the signal point of the transmission signal. As the signal-to-noise power ratio decreases, the signal point of the signal output from the correction means 3 separates from the signal point of the transmission signal. If the signal-to-noise power ratio is so low that the signal point crosses the boundary and enters an adjacent partition, an error occurs in restoration of the transmission bit.

The weighting means 12 in FIG. 12 determines a weighting coefficient based on the idea that the corrected signal point near the boundary has a low signal-to-noise power ratio and a low reliability. More specifically, as a distance L between a signal point of the transmission signal and a signal point of the signal output from the correction means 3 increases, a smaller weighting coefficient is given, as shown in FIG. 14.

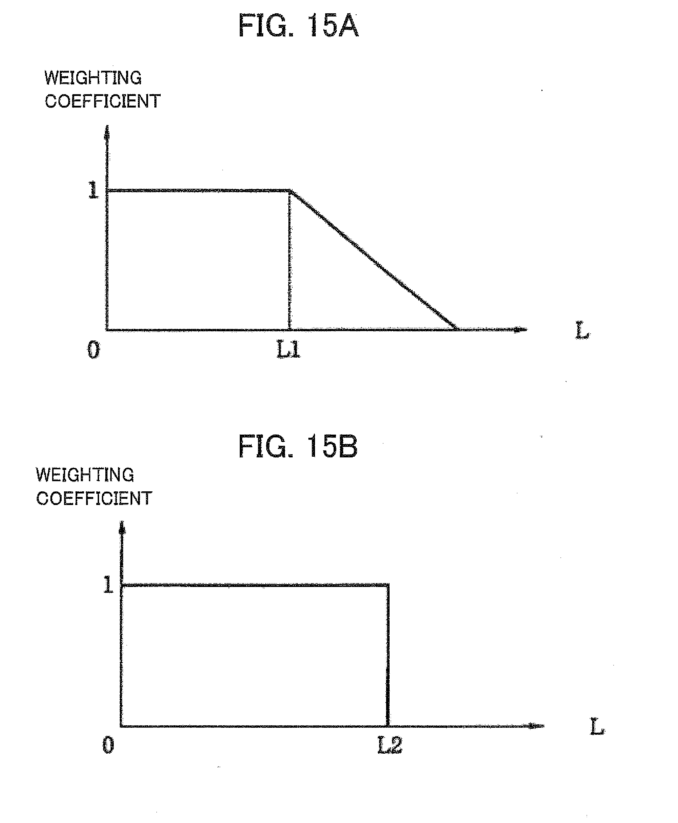

FIGs. 15A and 15B show two examples of determining a weighting coefficient. FIG. 15A shows that the weighting coefficient gradually decreases if the distance between the signal point of the transmission signal and the signal point of the signal output from the correction means 3 exceeds a predetermined threshold L1. FIG. 15B shows that the weighting coefficient becomes 0 when the distance between the signal point of the transmission signal and the signal point of the signal output from the correction means 3 exceeds a predetermined threshold L2.

The weighting means 12 in FIG. 12 multiplies the signal output from the correction means 3 by the weighting coefficient determined by the methods described above. The weighting coefficient may be multiplied after a hard decision is made on the signal output from the correction means 3.

As described above, the receiving device and the receiving method according to the second embodiment multiply the signal output from the correction means 3 by a weighting coefficient decreasing as the distance between the signal point of the transmission signal and the signal point of the signal output from the correction means 3 increases. This reduces the inter-carrier interference estimation error, thereby allowing the Doppler shift to be corrected accurately.

Third Embodiment

As already described in the second embodiment, if accuracy of the corrected signal

$\hat{x}$

is low, the inter-carrier interference estimation error becomes large, as can be understood from the equation 11 in the first embodiment, and consequently the inter-carrier interference cannot be suppressed sufficiently. In a receiving device and a receiving method according to a third embodiment, a signal output from the combining means 11 is fed back to reduce the inter-carrier interference estimation error.

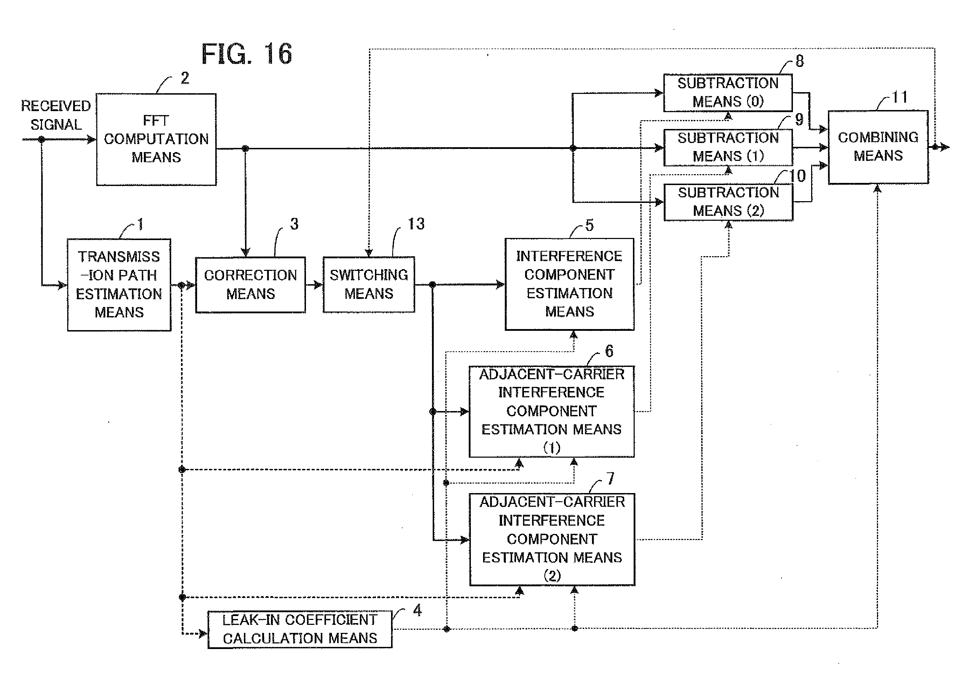

FIG. 16 is a block diagram schematically showing structure of the receiving device according to the third embodiment. In FIG. 16, elements identical to or corresponding to the elements in FIG. 4 (first embodiment) will be denoted by the same reference numerals. The receiving device shown in FIG. 16 differs from the receiving device shown in FIG. 4 in that a switching means 13 is included. The switching means 13 will be described mainly.

In the third embodiment, inter-carrier interference included in the received signal is first suppressed and the result is output from the combining means 11, as described in the first embodiment. The switching means 13 in FIG. 16 selects and outputs a signal input from the correction means 3. In the third embodiment, the signal output from the combining means 11 is fed back to the switching means 13. The switching means 13 selects and outputs the signal input from the combining means 11. On the basis of the signal output from the combining means 11, the inter-carrier interference is suppressed again, and the result is output from the combining means 11.

As described above, the receiving device and the receiving method according to the third embodiment improves the accuracy of

$\hat{x}$

in the equation 11 by feeding the signal output from the combining means 11 back and suppressing inter-carrier interference repeatedly, and consequently can correct the Doppler shift more accurately.

Fourth Embodiment

In a fourth embodiment, Doppler shift correction in a diversity receiving device will be described, taking dual antenna diversity as an example.

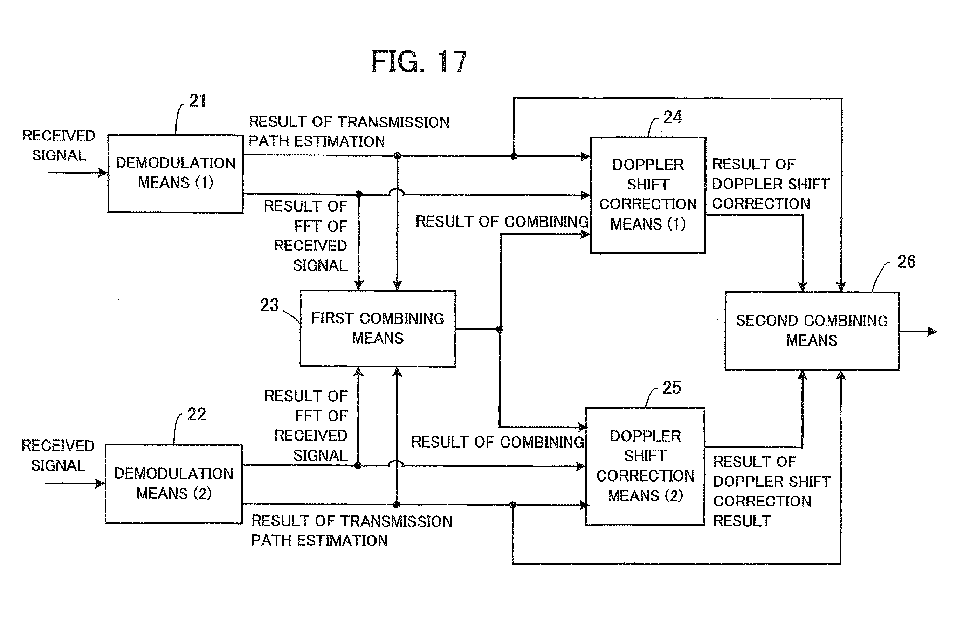

FIG. 17 is a block diagram schematically showing structure of a receiving device according to the fourth embodiment. As shown in FIG. 17, the receiving device according to the fourth embodiment includes demodulation means 21 and 22 for demodulating received signals, a first combining means 23 for combining signals output from the demodulation means 21 and 22, Doppler shift correction means 24 and 25 for compensating an effect of a Doppler shift included in the signals output from the demodulation means 21 and 22, and a second combining means 26 for combining signals output from the Doppler shift correction means 24 and 25.

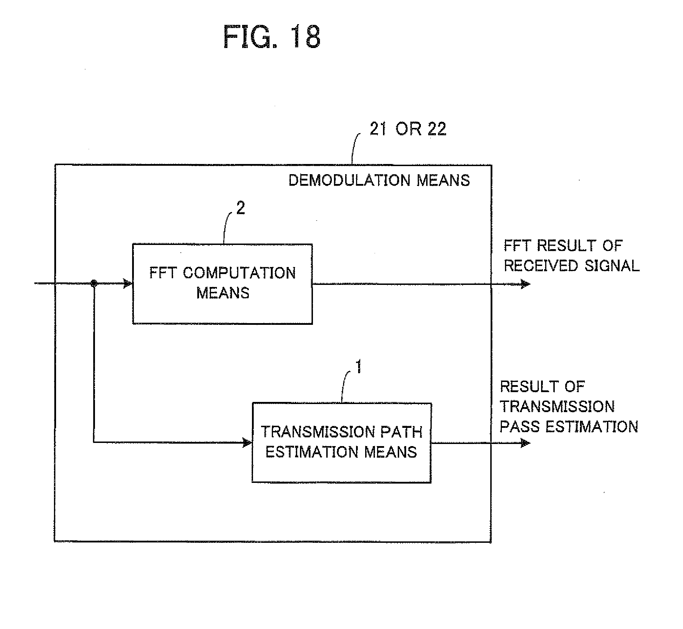

FIG. 18 is a block diagram schematically showing structure of the demodulation means 21 and 22 in FIG. 17. As shown in FIG. 18, the demodulation means 21 and 22 include an FFT computation means 2 and a transmission path estimation means 1 respectively. The FFT computation means 2 transforms the received signal to a frequency domain, and the transmission path estimation means 1 estimates the transmission path property from a known signal included in the received signal. These means are the same as those in the first embodiment.

The first combining means 23 in FIG. 17 combines signals obtained by performing FFT of the received signal, on the basis of the estimation result of the transmission path property obtained by the demodulation means (1) 21 and the demodulation means (2) 22. Generally known combining methods include selection combining, equal gain combining, and maximal ratio combining. The combining methods will be described briefly.

In FIG. 17, let the result of FFT of the received signal output from the demodulation means (1) 21 be $a_1 s + n_1$, let the estimation result of the transmission path property be $a_1'$, let the result of FFT of the received signal output from the demodulation means (2) 22 be $a_2 s + n_2$, and let the estimation result of the transmission path property be $a_2'$, where s represents a sent signal point, $a_1$ and $a_2$ represent the transmission path property acting on the transmission signal s, and $n_1$ and $n_2$ represent noise.

Selection combining is a method of comparing $|a_1'|$ and $|a_2'|$ and selecting and correcting a larger signal. For example, if $|a_1'| > |a_2'|$, a signal as expressed by equation 24 below

$$\frac{(a_1')^*}{|a_1'|^2}(a_1 s + n_1)$$

Equation 24

is output.

In equal gain combining, the signals output from the demodulation means (1) 21 and the demodulation means (2) 22 are corrected and then averaged out, as expressed by equation 25 below.

$$\frac{1}{2}\left\{\frac{(a_1')^*}{|a_1'|^2}(a_1 s + n_1) + \frac{(a_2')^*}{|a_2'|^2}(a_2 s + n_2)\right\}$$

Equation 25

In maximal ratio combining, the signals output from the demodulation means (1) 21 and the demodulation means (2) 22 are multiplied by the complex conjugate of the signal output from the transmission path estimation means 1 as a weight, and the signals are summed up, as expressed by equation 26 below.

$$\frac{(a_1')^*(a_1 s + n_1) + (a_2')^*(a_2 s + n_2)}{|a_1'|^2 + |a_2'|^2}$$

Equation 26

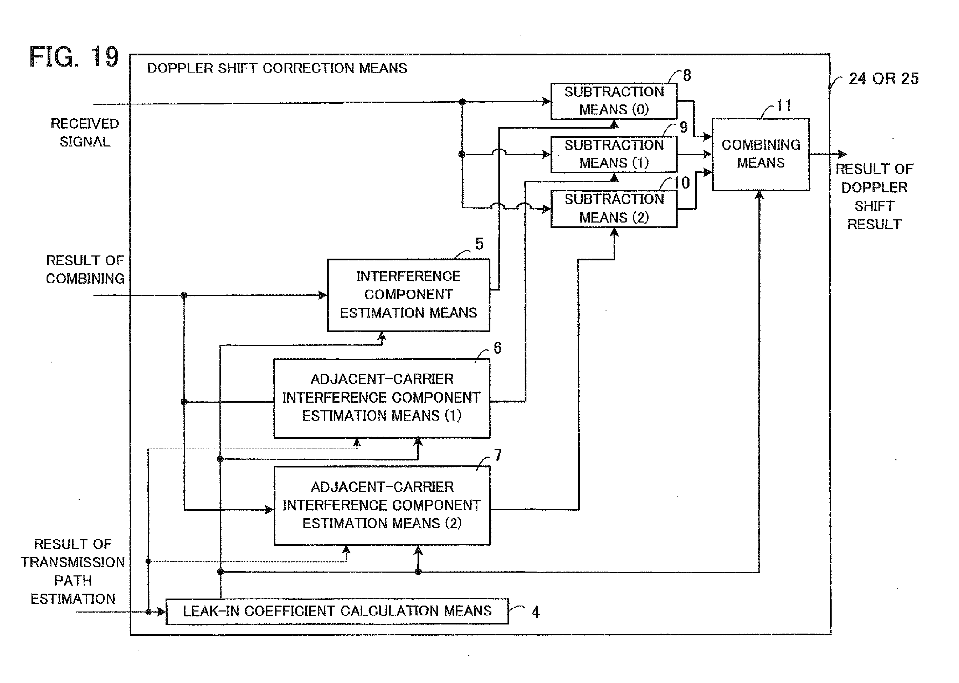

In FIG. 17, a signal combined by the combining method expressed by any of the equations 24 - 26 is input to the Doppler shift correction means (1) 24 and the Doppler shift correction means (2) 25. FIG. 19 is a block diagram schematically showing structure of the Doppler shift correction means (1) 24 and the Doppler shift correction means (2) 25. The means in FIG. 19 are the same as the corresponding means in the first embodiment (FIG. 4). The combined result input to the Doppler shift correction means (1) 24 and the Doppler shift correction means (2) 25 is used as
$\hat{x}$
in the equation 11 described in the first embodiment.

The second combining means 26 in FIG. 17 combines the signals output from the combining means included in the Doppler shift correction means (1) 24 and the Doppler shift correction means (2) 25. The second combining means 26 uses any of the selection combining, the equal gain combining, and the maximal ratio combining, for example, as its combining method.

Since the receiving device and the receiving method according to the fourth embodiment combine the signals output from a plurality of demodulation means and use the combined result as
$\hat{x}$
in the equation 11, as described above, the inter-carrier interference estimation error is reduced, and consequently the effect of the Doppler shift can be corrected more accurately.

Fifth Embodiment

In a fifth embodiment, a receiving device and a receiving method that can correct a Doppler shift accurately even if an FFT window position changes.

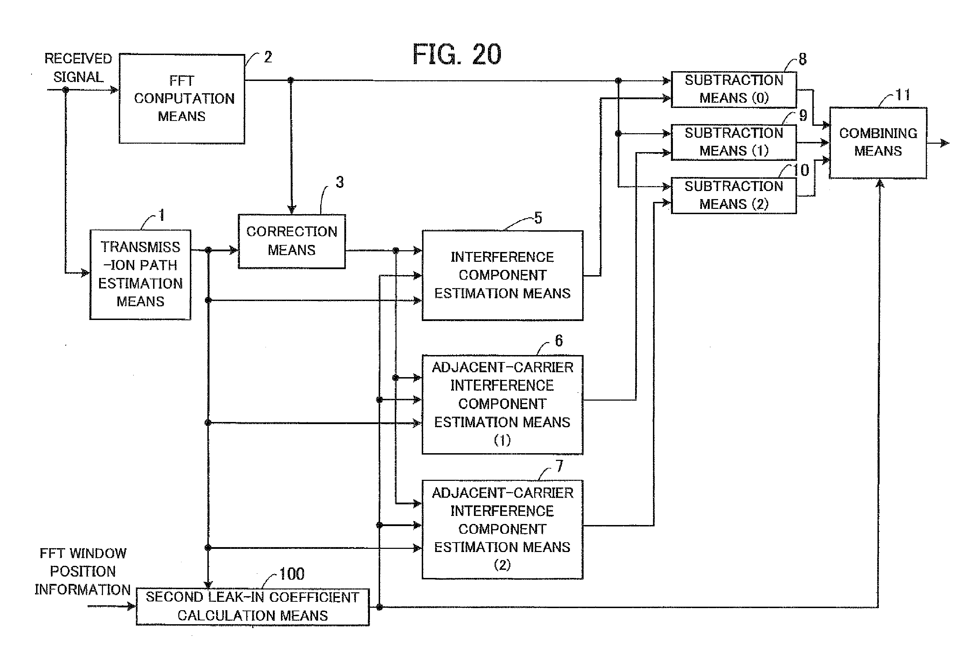

FIG. 20 is a block diagram schematically showing structure of the receiving device according to the fifth embodiment. In FIG. 20, elements identical to or corresponding to the elements in FIG. 4 used in the description of the first embodiment, are denoted by the same reference numerals. Specifically, elements 1, 2, 3, 5, 6, 7, 8, 9, 10, and 11 in FIG. 20 operate in a similar way to the elements having the identical reference numerals in FIG. 4. The receiving device according to the fifth embodiment differs from the receiving device according to the first embodiment in that a second leak-in coefficient calculation means 100 for receiving FFT window position information and the output from the transmission path estimation means 1, instead of the leak-in coefficient calculation means 4 in the first embodiment.

Next, the operation of the receiving device according to the fifth embodiment and the receiving method will be described in detail. The second leak-in coefficient calculation means 100 receives an output (a signal of estimation result of the transmission path property) of the transmission path estimation means 1 and FFT window position information, corrects a phase shift in the output signal of the transmission path estimation means 1, caused by a change in the FFT window position, on the basis of the FFT window position information given from the outside, calculates the inter-carrier interference leak-in coefficient, and outputs a signal indicating the leak-in coefficient.

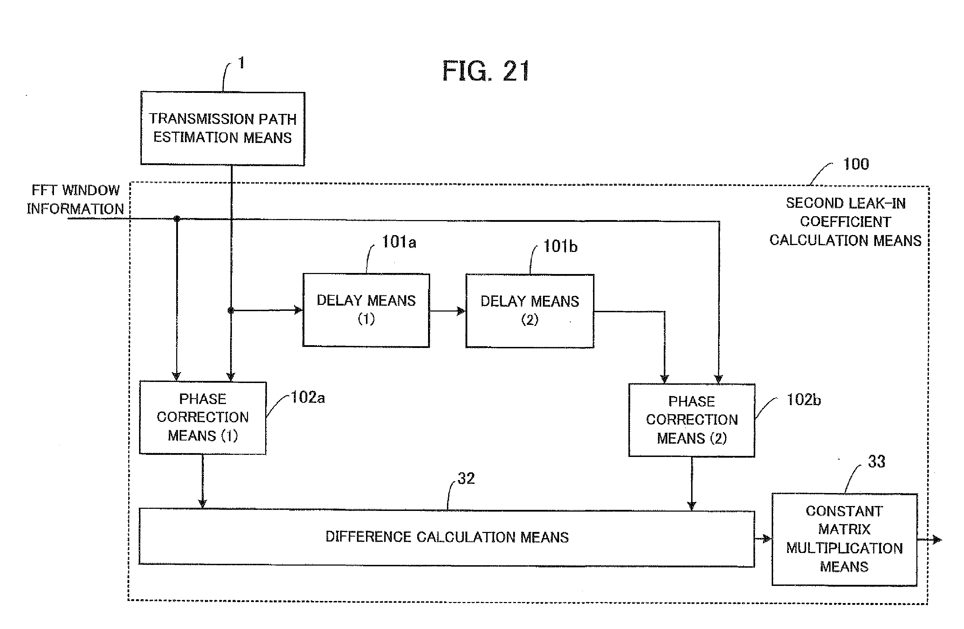

FIG. 21 is a block diagram schematically showing an example of structure of the second leak-in coefficient calculation means 100 shown in FIG. 20. As shown in FIG. 21, the second leak-in coefficient calculation means 100 includes a delay means (1) 101a for outputting the output from the transmission path estimation means 1 after a delay of a single symbol interval and a delay means (2) 101b for outputting the output of the delay means (1) 101a after another delay of a single symbol interval. The second leak-in coefficient calculation means 100 also includes a phase correction means (1) 102a, a phase correction means (2) 102b, a difference calculation means 32, and a constant matrix multiplication means 33. The difference calculation means 32 and the constant matrix multiplication means 33 are the same as those described in the first embodiment (FIG. 9).

The delay means (1) 101a delays the output of the transmission path estimation means 1 by a single symbol interval, and the delay means (2) 101b delays the output of the delay means (1) 101a further by a single symbol interval. The phase correction means (1) 102a gives a phase rotation to the output of the transmission path estimation means 1 in accordance with the input FFT window position information. The FFT window position information is an input signal supplied from the outside and expresses the difference of the FFT window position in the FFT computation means 2 from the reference position or the amount of difference from the preceding symbol. The phase correction means (1) 102a gives the output of the transmission path estimation means 1 a reverse phase rotation from the phase rotation of the output of the transmission path estimation means 1 resulting from the difference in the FFT window position. Accordingly, the output of the phase correction means (1) 102a is a signal with the effect of the difference in FFT window position eliminated. The phase correction means (2) 102b corrects the phase of the output of the phase correction means (2) 102b in accordance with the FFT window position information corresponding to the output of the delay means (2) 101b. The signals of which phase is corrected by the phase correction means (1) 102a and the phase correction means (2) 102b respectively are converted to a leak-in coefficient by the difference calculation means 32 and the constant matrix multiplication means 33.

The second leak-in coefficient calculation means 100 is configured to calculate the leak-in coefficient from the signal of which phase rotation resulting from the FFT window shift is corrected and is not confined to the structure shown in FIG. 21. For example, although the output of the transmission path estimation means 1 is directly input to the delay means (1) 101a in FIG. 21, the output of the transmission path estimation means 1 may be corrected by a phase correction means (not shown in the drawings), and then the corrected signal may be input to the delay means (1) 101a. In this case, the phase correction means (1) 102a and the phase correction means (2) 102b can be omitted.

The second leak-in coefficient calculation means 100 may also include three or more delay means and may calculate a leak-in coefficient by using signals of estimation results of the transmission path property of three or more symbols. The configuration can be used if each signal of estimation result of the transmission path property is phase-corrected. The number of delay means may also be only one, and the leak-in coefficient may be calculated by using the signal of estimation result of the transmission path property of a single symbol. Accordingly, the second leak-in coefficient calculation means 100 can be configured by at least one delay means for outputting the output of the transmission path estimation means 1 after a delay of a single symbol interval, at least one phase correction means for giving the output of the transmission path estimation means 1 a reverse phase rotation from the phase rotation of the output of the transmission path estimation means 1 resulting from the difference from the preceding symbol or the difference from the reference FFT window position obtained as the FFT window position information, a difference calculation means 32 for calculating the difference between the signal of estimation result of the transmission path property of which phase has been corrected by the phase correction means and the signal of estimation result of the transmission path property which has been delayed by the delay means in units of symbols and has been phase-corrected by the phase correction means, and a constant matrix multiplication means 33 for multiplying the output of the difference calculation means 32 by a constant matrix.

According to the receiving device and the receiving method according to the fifth embodiment, even if the FFT window position is changed in the FFT computation from the outside, the leak-in coefficient is calculated from the signal in which phase rotation caused by the change in FFT window position has been corrected, so that the Doppler shift can be corrected for independently of the FFT window position, and a mobile reception capability can be improved.

Sixth Embodiment

In the fifth embodiment, the description has been made as to a case where the FFT window position information is known and input from the outside. A receiving device and a receiving method according to a sixth embodiment, however, can correct the Doppler shift accurately even if the FFT window position information is not known.

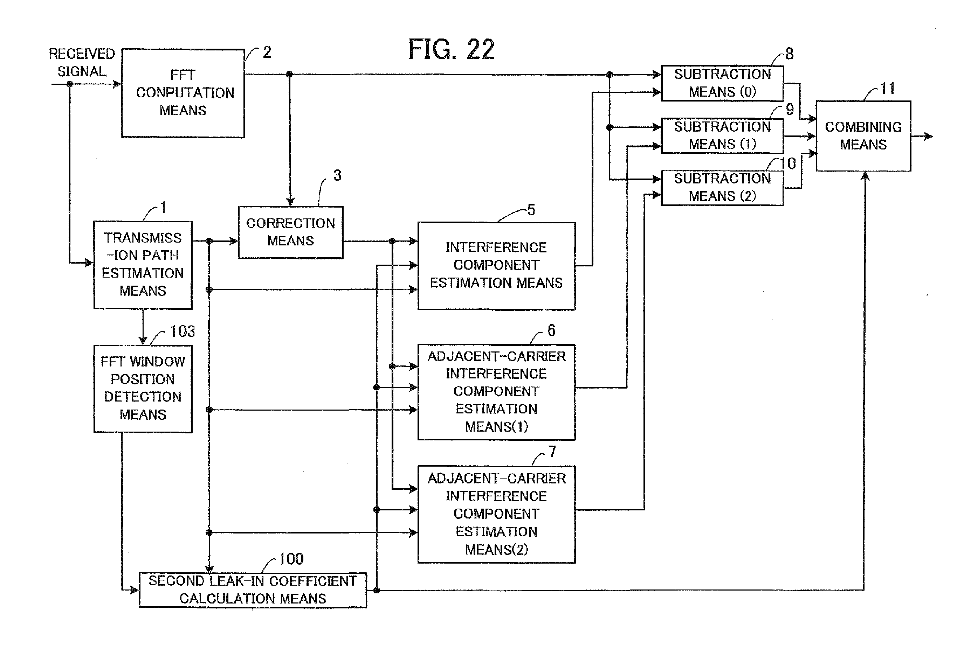

FIG. 22 is a block diagram schematically showing structure of the receiving device according to the sixth embodiment. In FIG. 22, elements identical to or corresponding to the elements in FIG. 20 used to describe the fifth embodiment, are denoted by the same reference numerals. Specifically, elements 1, 2, 3, 5, 6, 7, 8, 9, 10, 11, and 100 in FIG. 22 operate in a similar way to the elements having the corresponding reference numerals in FIG. 20. The receiving device according to the sixth embodiment differs from the receiving device according to the fifth embodiment in that an FFT window position detection means 103 is provided and that the FFT window position information detected by the FFT window position detection means 103 is input to the second leak-in coefficient calculation means 100.

The operation of the receiving device and the receiving method according to the sixth embodiment will next be described. The FFT window position detection means 103 generates FFT window position information on the basis of an output (a signal of estimation result of the transmission path property) of the transmission path estimation means 1 and outputs the information to the second leak-in coefficient calculation means 100.

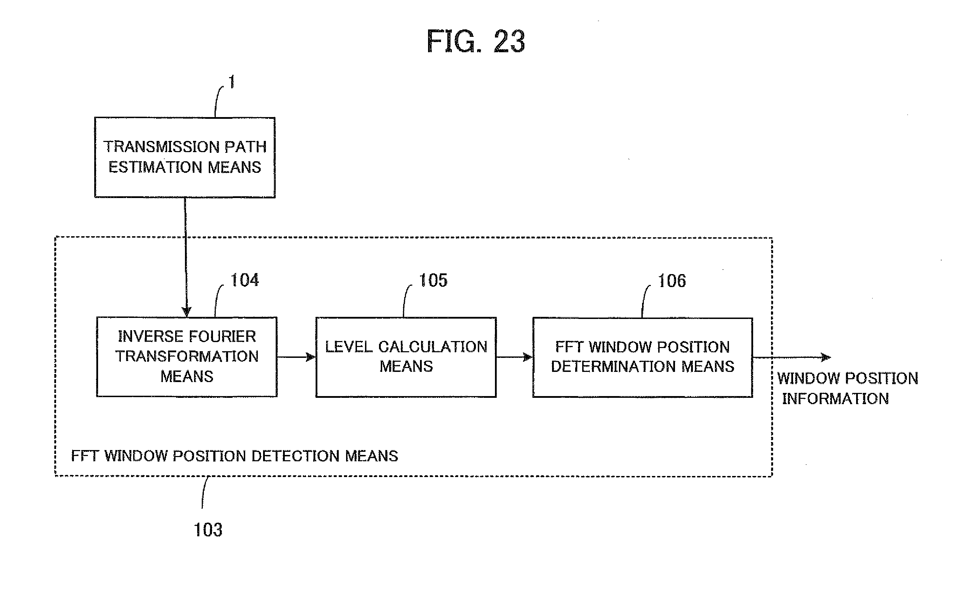

FIG. 23 is a block diagram schematically showing an example of structure of the FFT window position detection means 103 shown in FIG. 22. As shown in FIG. 23, the FFT window position detection means 103 includes an inverse Fourier transformation means 104, a level calculation means 105, and an FFT window position determination means 106.

The inverse Fourier transformation means 104 performs an inverse Fourier transform on the output of the transmission path estimation means 1 at given number of points (data count) and outputs the results. The output of the inverse Fourier transformation means 104 is input to the level calculation means 105. The level calculation means 105 calculates a square value of an absolute value of a complex signal, which is the output of the inverse Fourier transformation means 104, or an absolute value of a complex signal. The output of the level calculation means 105 represents a delay profile of the transmission path or its equivalent signal. The FFT window position determination means 106 determines the FFT window position from a difference between a point number (index) of the reference inverse Fourier transform and the index of the inverse Fourier transform which gives the maximum value of the output of the level calculation means 105, and outputs it as the FFT window position information.

The difference in delay profile information among symbols, obtained as the output of the level calculation means 105, represents a change in the FFT window position, and detection of the difference between the maximum value and the reference value of the output of the level calculation means 105, is not always necessary. For example, a change in index of the inverse Fourier transform that gives the maximum value of the output of the level calculation means 105 may be detected as the FFT window position information. Alternatively, the FFT window position may be detected from the difference between the recently detected output signal of the level calculation means 105 and a newly detected output signal of the level calculation means 105, instead of the maximum value of the output of the level calculation means 105.

As described above, the receiving device and the receiving method according to the sixth embodiment is configured to calculate the leak-in coefficient from the signal obtained by correcting the phase rotation caused by the change in the FFT window position even if the FFT window position is changed from the outside in the FFT computation. Accordingly, the Doppler shift can be corrected for independently of the effect of the FFT window position, and a mobile reception capability can be improved consequently.

REFERENCE CHARACTERS

1 transmission path estimation means; 2 FFT computation means; 3 correction means; 4 leak-in coefficient calculation means; 5 interference component estimation means; 6 adjacent-carrier interference component estimation means (1); 7 adjacent-carrier interference component estimation means (2); 8 subtraction means (0); 9 subtraction means (1); 10 subtraction means (2); 11 combining means; 12 weighting means; 13 switching means; 21 demodulation means (1); 22 demodulation means (2); 23 first combining means; 24 Doppler shift correction means (1); 25 Doppler shift correction means (2); 26 second combining means; 31 delay means; 32 difference calculation means; 33 constant matrix multiplication means; 100 second leak-in coefficient calculation means; 101a delay means (1); 101b delay means (2); 102a phase correction means (1); 102b phase correction means (2); 103 FFT window position detection means; 104 inverse Fourier transformation means; 105 level calculation means; 106 FFT window position determination means.

**Claims**

1.  A receiving device for receiving a signal obtained by inserting a known signal into a signal obtained by frequency-multiplexing a plurality of carriers used to send transmission data, at given intervals on the time axis or a signal obtained by frequency-multiplexing by assigning a known pilot carrier to a plurality of given carriers among carriers used to send transmission data, the receiving device comprising:

    a transmission path estimation means (1) for estimating a transmission path property from the known signal or the known pilot carrier included in the received signal, thereby outputting a signal of estimation result of the transmission path property;

an FFT computation means (2) for transforming the received signal to a frequency domain, thereby outputting a signal of the frequency domain;

a correction means (3) for correcting distortion of the signal of the frequency domain output from the FFT computation means (2) on the basis of the signal of estimation result of the transmission path property output from the transmission path estimation means (1);

a leak-in coefficient calculation means (4) for calculating an inter-carrier interference leak-in coefficient on the basis of the signal of estimation result of the transmission path property output from the transmission path estimation means (1), thereby outputting a signal indicating the leak-in coefficient;

an interference component estimation means (5) for estimating an interference component included in the carrier (n) to be demodulated, on the basis of the signal indicating the leak-in coefficient output from the leak-in coefficient calculation means (4) and the corrected signal of the frequency domain output from the correction means (3);

a first subtraction means (8) for obtaining a desired first signal component included in the carrier (n) to be demodulated, by subtracting the interference component estimated by the interference component estimation means (5) from the signal of the frequency domain output from the FFT computation means (1);

a signal component estimation means (6, 7, 9, 10) for estimating a desired second signal component included in a plurality of carriers other than the carrier (n) to be demodulated, on the basis of the signal of the frequency domain output from the FFT computation means (2), the signal of estimation result of the transmission path property output from the transmission path estimation means (1), the signal indicating the leak-in coefficient output from the leak-in coefficient calculation means (4), and the corrected signal of the frequency domain output from the correction means (3), the signal component estimation means (6, 7, 9, 10) being arranged to estimate the second signal component by subtracting, from each of a first carrier (n+1) and a second carrier (n-1) in the signal output from the FFT computation means (2) that are each adjacent to the carrier (n) to be demodulated, a sum of interference components other than signals leaking from the carrier (n) to be demodulated to the respective first or second carrier (n+1; n-1); and

a combining means (11) for combining the first signal component output from the first subtraction means (8) and the second signal component output from the signal component estimation means (6, 7, 9, 10).

2. The receiving device according to Claim 1, wherein the signal component estimation means includes:

an unwanted component estimation means (6, 7) for estimating the interference components other than signals leaking from the carrier (n) that is to be demodulated to the first and second carriers (n+1, n-1), on the basis of the signal of estimation result of the transmission path property output from the transmission path estimation means (1), the signal indicating the leak-in coefficient output from the leak-in coefficient calculation means (4), and the corrected signal of the frequency domain output from the correction means (3); and

a second subtraction means (9, 10) for subtracting, from each of the first and second carrier (n+1, n-1) in the signal output from the FFT computation means (2), the sum of interference components other than signals leaking from the carrier (n) that is to be demodulated to the respective first or second carrier (n+1; n-1).

3. The receiving device according to Claim 1 or 2, further comprising a weighting means (12) for determining a weighting coefficient of each carrier on the basis of the corrected signal of the frequency domain of each carrier output from the correction means (3) and multiplying the corrected signal of the frequency domain by the weighting coefficient so as to weight the corrected signal of the frequency domain input to the interference component estimation means and the signal component estimation means.

4. The receiving device according to Claim 1 or 2, further comprising a switching means (13) for receiving the corrected signal of the frequency domain output from the correction means (3) and the signal output from the combining means (11), thereby outputting either the corrected signal of the frequency domain output from the correction means (3) or the signal output from the combining means (11) selectively to the signal component estimation means (6, 7, 9, 10).

5. A receiving device for receiving a signal obtained by inserting a known signal into a signal obtained by frequency-multiplexing a plurality of carriers used to send transmission data, at given intervals on the time axis, or a signal obtained by frequency-multiplexing by assigning a known pilot carrier to a plurality of given carriers among carriers used to send transmission data, by using a plurality of antennas, the receiving device comprising:

a plurality of demodulation means (21, 22) corresponding respectively to the plurality of antennas;

a plurality of Doppler shift correction means (24, 25) corresponding respectively to the plurality of demodulation means (21, 22);

a first combining means (23) for combining signals output from the plurality of demodulation means (21, 22); and

a second combining means (26) for combining signals output from the plurality of Doppler shift correction means (24, 25);

each of the plurality of demodulation means (21, 22) including:

a transmission path estimation means (1) for estimating a transmission path property from the known signal or the pilot carrier included in the received signal, thereby outputting a signal of estimation result of the transmission path property; and

an FFT computation means (2) for transforming the received signal to a frequency domain, thereby outputting a signal of the frequency domain;

the first combining means (23) combining the signals of the frequency domain output from the FFT computation means (2), on the basis of the signal of estimation result of the transmission path property output from the transmission path estimation means (1) included in each of the plurality of demodulation means (21, 22);

each of the plurality of Doppler shift correction means (24, 25) including:

a leak-in coefficient calculation means (4) for calculating an inter-carrier interference leak-in coefficient on the basis of the signal of estimation result of the transmission path property output from the transmission path estimation means (1) included in the corresponding demodulation means of the plurality of demodulation means (21, 22), thereby outputting a signal indicating the leak-in coefficient;

an interference component estimation means (5) for estimating an interference component included in the carrier (n) to be demodulated, on the basis of the signal indicating the leak-in coefficient output from the leak-in coefficient calculation means (4) and the signal output from the first combining means (23);

a subtraction means (8) for obtaining a desired signal component included in the carrier (n) to be demodulated, by subtracting the interference component signal estimated by the interference component estimation means (5) from the signal of the frequency domain output from the FFT computation means (2) included in the corresponding demodulation means;

a signal component estimation means (6, 7, 9, 10) for estimating a desired second signal component included in a plurality of carriers other than the carrier (n) to be demodulated, on the basis of the signal of the frequency domain output from the FFT computation means (2) included in the corresponding demodulation means, the signal of estimation result of the transmission path property output from the transmission path estimation means (1), the signal indicating the leak-in coefficient output from the leak-in coefficient calculation means (4), and the signal output from the first combining means (23), the signal component estimation means (6, 7, 9, 10) being arranged to estimate the second signal component by subtracting, from each of a first carrier (n+1) and a second carrier (n-1) in the signal output from the FFT computation means (2) that are each adjacent to the carrier (n) to be demodulated, a sum of interference components other than signals leaking from the carrier (n) to be demodulated to the respective first or second carrier (n+1; n-1); and

a third combining means (11) for combining the signal output from the subtraction means (8) and the signal output from the signal component estimation means (6, 7, 9, 10);

the second combining means (26) being arranged to combine signals output from the third combining means (11) included in the plurality of Doppler shift correction means (24, 25), on the basis of signals of estimation results of the transmission path property output from the transmission path estimation means (1) included in each of the plurality of demodulation means (21, 22).

6. A receiving method of receiving a signal obtained by inserting a known signal into a signal obtained by frequency-multiplexing a plurality of carriers used to send transmission data, at given intervals on the time axis or a signal obtained by frequency-multiplexing by assigning a known pilot carrier to a plurality of given carriers among carriers used to send transmission data, the receiving method comprising:

a transmission path estimation step of estimating a transmission path property from the known signal or the pilot carrier included in the received signal, thereby outputting a signal of estimation result of the transmission path property;

an FFT computation step of transforming the received signal to a frequency domain, thereby outputting a signal of the frequency domain;

a correction step of correcting distortion of the signal of the frequency domain generated in the FFT computation step, on the basis of the signal of estimation result of the transmission path property output from the transmission path estimation step;

a leak-in coefficient calculation step of calculating an inter-carrier interference leak-in coefficient on the basis of the signal of estimation result of the transmission path property generated in the transmission path estimation step, thereby outputting a signal indicating the leak-in coefficient;

an interference component estimation step of estimating an interference component included in the carrier (n) to be demodulated, on the basis of the signal indicating the leak-in coefficient generated in the leak-in coefficient calculation step, and the corrected signal of the frequency domain generated in the correction step;

a first subtraction step of obtaining a desired first signal component included in the carrier (n) to be demodulated, by subtracting the interference component estimated in the interference component estimation step from the signal of the frequency domain generated in the FFT computation step;

a signal component estimation step of estimating a desired second signal component included in a plurality of carriers other than the carrier (n) to be demodulated, on the basis of the signal of the frequency domain output from the FFT computation step, the signal of estimation result of the transmission path property generated in the transmission path estimation step, the signal indicating the leak-in coefficient generated in the leak-in coefficient calculation step, and the corrected signal of the frequency domain generated in the correction step, the second signal component being estimated by subtracting, from each of a first carrier (n+1) and a second carrier (n-1) in the signal output from the FFT computation means (2) that are each adjacent to the carrier (n) to be demodulated, a sum of interference components other than signals leaking from the carrier (n) to be demodulated to the respective first or second carrier (n+1; n-1); and

a combining step of generating a combined signal by combining the first signal component generated in the first subtraction step and the second signal component generated in the signal component estimation step.

7. The receiving method according to Claim 6, wherein the signal component estimation step comprises:

an unwanted component estimation step of estimating the interference components other than signals leaking from the carrier (n) that is to be demodulated to the first and second carriers (n+1, n-1), on the basis of the signal of estimation result of the transmission path property generated in the transmission path estimation step, the signal indicating the leak-in coefficient generated in the leak-in coefficient calculation step, and the corrected signal of the frequency domain generated in the correction step; and

a second subtraction step of subtracting, from each of the first and second carrier (n+1, n-1) in the signal output from the FFT computation means (2), the sum of interference components other than signals leaking from the carrier (n) that is to be demodulated to the respective first or second carrier (n+1; n-1).

8. The receiving method according to Claim 6 or 7, further comprising a weighting step of determining a weighting coefficient of each carrier on the basis of the corrected signal of the frequency domain of each carrier generated in the correction step, and multiplying the corrected signal of the frequency domain by the weighting coefficient so as to weight the corrected signal of the frequency domain used in the interference component estimation step and the signal component estimation step.

9. The receiving method according to Claim 6 or 7, further comprising:

generating a second estimate of the interference component, on the basis of the signal indicating the leak-in coefficient generated in the leak-in coefficient calculation step and the combined signal generated in the combining step;

obtaining a second estimate of the first signal component by subtracting the second estimate of the interference component from the signal of the frequency domain generated in the FFT computation step;

generating a second estimate of the second signal component on the basis of the signal of the frequency domain output from the FFT computation step, the signal of estimation result of the transmission path property generated in the transmission path estimation step, the signal indicating the leak-in coefficient generated in the leak-in coefficient calculation step, and the combined signal generated in the combining step; and

combining the second estimate of the first signal component and the second estimate for the second signal.

10. A receiving method of receiving a signal obtained by inserting a known signal into a signal obtained by frequency-multiplexing a plurality of carriers used to send transmission data, at given intervals on the time axis, or a signal obtained by frequency-multiplexing by assigning a known pilot carrier to a plurality of given carriers among carriers used to send transmission data, by using a plurality of antennas, the receiving method comprising:

a demodulation step of generating a plurality of demodulation signals corresponding respectively to the plurality of antennas;

a Doppler shift correction step of performing a Doppler shift correction on the plurality of demodulation signals;
a first combining step of combining a plurality of demodulation signals generated in the demodulation step; and
a second combining step of combining signals generated in the Doppler shift correction step;
the demodulation step including:

a transmission path estimation step of estimating a transmission path property from the known signal or the pilot carrier included in the received signal, thereby outputting a signal of estimation result of the transmission path property; and
an FFT computation step of transforming the received signal to a frequency domain, thereby outputting a signal of the frequency domain;

the first combining step including:

a step of combining the signals of the frequency domain generated in the FFT computation step, on the basis of the signal generated in the transmission path estimation step;

the Doppler shift correction step including:

a leak-in coefficient calculation step of calculating an inter-carrier interference leak-in coefficient on the basis of the signal generated in the transmission path estimation step, thereby outputting a signal indicating the leak-in coefficient;
an interference component estimation step of estimating an interference component included in the carrier (n) to be demodulated, on the basis of the signal indicating the leak-in coefficient, generated in the leak-in coefficient calculation step, and the signal output from the first combining step;
a subtraction step of obtaining a desired signal component included in the carrier (n) to be demodulated, by subtracting the interference component signal estimated in the interference component estimation step from the signal of the frequency domain generated in the FFT computation step;
a signal component estimation step of estimating a desired second signal component included in a plurality of carriers other than the carrier (n) to be demodulated, on the basis of the signal of the frequency domain generated in the FFT computation step, the signal of the frequency domain generated in the transmission path estimation step, the signal indicating the leak-in coefficient, generated in the leak-in coefficient calculation step, and the signal generated in the first combining step, the signal component estimation means (6, 7, 9, 10) being arranged to estimate the second signal component by subtracting, from each of a first carrier (n+1) and a second carrier (n-1) in the signal output from the FFT computation means (2) that are each adjacent to the carrier (n) to be demodulated, a sum of interference components other than signals leaking from the carrier (n) to be demodulated to the respective first or second carrier (n+1; n-1); and
a third combining step of combining signals output from the subtraction step and the signal component estimation step;
the second combining step including a step of combining signals generated in the third combining step, on the basis of the signal of estimation result of the transmission path property generated in the transmission path estimation step.

11. A receiving device for receiving a signal obtained by inserting a known signal into a signal obtained by frequency-multiplexing a plurality of carriers used to send transmission data, at given intervals on the time axis, or a signal obtained by frequency-multiplexing by assigning a known pilot carrier to a plurality of given carriers among carriers used to send transmission data, the receiving device comprising:

a transmission path estimation means (1) for estimating a transmission path property from the known signal or the pilot carrier included in the received signal, thereby outputting a signal of estimation result of the transmission path property;
an FFT computation means (2) for transforming the received signal to a frequency domain, thereby outputting a signal of the frequency domain;
a correction means (3) for correcting distortion of the signal of the frequency domain output from the FFT computation means (2), on the basis of the signal of estimation result of the transmission path property output from the transmission path estimation means (1);
a leak-in coefficient calculation means (100) for calculating an inter-carrier interference leak-in coefficient on the basis of the signal of estimation result of the transmission path property output from the transmission path estimation means (1) and FFT window position information in the FFT computation means (2), thereby outputting a signal indicating the leak-in coefficient;

an interference component estimation means (5) for estimating an interference component included in the carrier (n) to be demodulated, on the basis of the signal indicating the leak-in coefficient output from the leak-in coefficient calculation means (100), and the corrected signal of the frequency domain output from the correction means (3);

a first subtraction means (8) for obtaining a desired first signal component included in the carrier (n) to be demodulated, by subtracting the interference component estimated by the interference component estimation means (5) from the signal of the frequency domain output from the FFT computation means (2);

a signal component estimation means (6, 7, 9, 10) for estimating a desired second signal component included in a plurality of carriers other than the carrier (n) to be demodulated, on the basis of the signal of the frequency domain output from the FFT computation means (2), the signal of estimation result of the transmission path property output from the transmission path estimation means (1), the signal indicating the leak-in coefficient output from the leak-in coefficient calculation means (100), and the corrected signal of the frequency domain output from the correction means (3), the signal component estimation means (6, 7, 9, 10) being arranged to estimate the second signal component by subtracting, from each of a first carrier (n+1) and a second carrier (n-1) in the signal output from the FFT computation means (2) that are each adjacent to the carrier (n) to be demodulated, a sum of interference components other than signals leaking from the carrier (n) to be demodulated to the respective first or second carrier (n+1; n-1); and

a combining means (11) for combining the first signal component output from the first subtraction means (8) and the second signal component output from the signal component estimation means (6, 7, 9, 10).

12. A receiving device for receiving a signal obtained by inserting a known signal into a signal obtained by frequency-multiplexing a plurality of carriers used to send transmission data, at given intervals on the time axis, or a signal obtained by frequency-multiplexing by assigning a known pilot carrier to a plurality of given carriers among carriers used to send transmission data, the receiving device comprising:

a transmission path estimation means (1) for estimating a transmission path property from the known signal or the pilot carrier included in the received signal, thereby outputting a signal of estimation result of the transmission path property;

an FFT computation means (2) for transforming the received signal to a frequency domain, thereby outputting a signal of the frequency domain;

a correction means (3) for correcting distortion of the signal of the frequency domain output from the FFT computation means (2), on the basis of the signal of estimation result of the transmission path property output from the transmission path estimation means (1);

an FFT window position detection means (103) for detecting an FFT window position in the FFT computation means (2), on the basis of the signal of estimation result of the transmission path property output from the transmission path estimation means (1), thereby outputting FFT window position information;

a leak-in coefficient calculation means (100) for calculating an inter-carrier interference leak-in coefficient, on the basis of the signal of estimation result of the transmission path property output from the transmission path estimation means (1) and the FFT window position information, thereby outputting a signal indicating the leak-in coefficient;

an interference component estimation means (5) for estimating an interference component included in the carrier (n) to be demodulated, on the basis of the signal indicating the leak-in coefficient output from the leak-in coefficient calculation means (100) and the corrected signal of the frequency domain output from the correction means (3);

a first subtraction means (8) for obtaining a desired first signal component included in the carrier (n) to be demodulated, by subtracting the interference component estimated by the interference component estimation means (5) from the signal of the frequency domain output from the FFT computation means (2);

a signal component estimation means (6, 7, 9, 10) for estimating a desired second signal component included in a plurality of carriers other than the carrier (n) to be demodulated, on the basis of the signal of the frequency domain output from the FFT computation means (2), the signal of estimation result of the transmission path property output from the transmission path estimation means (1), the signal indicating the leak-in coefficient output from the leak-in coefficient calculation means (100), and the corrected signal of the frequency domain output from the correction means (3), the signal component estimation means (6, 7, 9, 10) being arranged to estimate the second signal component by subtracting, from each of a first carrier (n+1) and a second carrier (n-1) in the signal output from the FFT computation means (2) that are each adjacent to the carrier (n) to be demodulated, a sum of interference components other than signals leaking from the carrier (n) to be demodulated to the respective first or second carrier (n+1; n-1); and

a combining means (11) for combining the first signal component output from the first subtraction means (8) and the second signal component output from the signal component estimation means (6, 7, 9, 10).

13. The receiving device according to Claim 11 or 12, wherein the leak-in coefficient calculation means (100) includes:

at least one delay means (101a, 101b) for outputting the output of the transmission path estimation means (1) after a delay of a single symbol interval;

at least one phase correction means (102a, 102b) for giving the output of the transmission path estimation means (1) a reverse phase rotation from the phase rotation of the output of the transmission path estimation means, resulting from the difference from the preceding symbol or the difference of the FFT window position obtained as the FFT window position information from the reference position;

a difference calculation means (32) for calculating the difference between the signal of estimation result of the transmission path property of which phase has been corrected by the phase correction means (102a, 102b) and the signal of estimation result of the transmission path property which has been delayed by the delay means (101a, 101b) in units of symbols and has been phase-corrected by the phase correction means; and

a constant matrix multiplication means (33) for multiplying the output of the difference calculation means (32) by a constant matrix.

14. The receiving device according to Claim 12, wherein the FFT window position detection means (103) includes:

an inverse Fourier transformation means (104) for performing an inverse Fourier transform on the output of the transmission path estimation means (1);

a level calculation means (105) for calculating the square value of the absolute value of the complex signal, which is the output of the inverse Fourier transformation means (104), or the absolute value of the complex signal; and

a window position determination means (106) for detecting an FFT window position from a change in the output of the level calculation means (105) or the index of the inverse Fourier transform that gives the maximum value of the output of the level calculation means (105).

**Patentansprüche**

1. Eine Empfangsvorrichtung zum Empfangen eines Signals, welches erhalten ist durch Einfgen eines bekannten Signals in ein Signal, welches erhalten ist durch Frequenz-Multiplexen einer Vielzahl von Trgern, verwendet zum Senden einer Datenbertragung bei gegebenen Intervallen auf der Zeitachse, oder eines Signals, welches erhalten ist durch Frequenz-Multiplexen durch Zuordnen eines bekannten Pilottrgers zu einer Vielzahl von gegebenen Trgern aus zum Senden von bertragungsdaten verwendeten Trgern, wobei die Empfangsvorrichtung umfasst:

bertragungspfad-Abschtzungsmittel (1) zum Abschtzen einer bertragungspfadeigenschaft aus dem bekannten Signal oder dem in dem empfangenen Signal umfassten bekannten Pilottrger, wodurch ein Abschtzungsergebnissignal der bertragungspfadeigenschaft ausgegeben wird;

FFT-Berechnungsmittel (2) zum Transformieren des empfangenen Signals in einen Frequenzbereich, wodurch ein Signal des Frequenzbereichs ausgegeben wird;

Korrekturmittel (3) zum Korrigieren einer Strung des von dem FFT-Berechnungsmittel (2) ausgegebenen Signals des Frequenzbereichs auf der Basis des von den bertragungspfad-Abschtzungsmitteln (1) ausgegebenen Abschtzungsergebnissignals der bertragungspfadeigenschaft;

Einstreuungs-Koeffizient-Berechnungsmittel (4) zum Berechnen eines Zwischentrgerinterferenz-Einstreuungs-Koeffizienten auf der Basis des von den bertragungspfad-Abschtzungsmitteln (1) ausgegebenen Abschtzungsergebnissignals der

bertragungspfadeigenschaft, wodurch ein den Einstreuungs-Koeffizienten angebendes Signal ausgegeben wird;

Interferenzkomponenten-Abschtzungsmittel (5) zum Abschtzen einer in dem zu demodulierenden Trger (n) umfassten Interferenzkomponente auf der Basis des den von den Einstreuungs-Koeffizienten-Berechnungsmitteln (4) ausgegebenen Einstreuungs-Koeffizienten angebenden Signals und des von den Korrekturmitteln (3) ausgegebenen korrigierten Signals des Frequenzbereichs;

erste Subtraktionsmittel (8) zum Erhalten einer gewnschten ersten Signalkomponente, welche in dem zu demodulierenden Trger (n) umfasst ist, durch Subtrahieren der durch die Interferenzkomponenten-Abschtzungsmittel (5) abgeschtzten Interferenzkomponente von dem von den FFT-Berechnungsmitteln (1) ausgegebenen Signal des Frequenzbereichs;

Signalkomponenten-Abschtzungsmittel (6, 7, 9, 10) zum Abschtzen einer gewnschten zweiten Signalkomponente, welche in einer Vielzahl von Trgern mit Ausnahme des zu demodulierenden Trgers (n) umfasst ist, auf der Basis des von den FFT-Berechnungsmittel (2) ausgegebenen Signals des Frequenzbereichs, des von den bertragungspfad-Abschtzungsmitteln (1) ausgegebenen Abschtzungsergebnissignals der bertragungspfadeigenschaft, des von den Einstreuungs-Koeffizienten-Berechnungsmitteln (4) ausgegebenen, den Einstreuungs-Koeffizienten angebenden Signals und des von den Korrekturmitteln (3) ausgegebenen Signals des Frequenzbereichs, wobei die Signalkomponenten-Abschtzungsmittel (6, 7, 9, 10) angeordnet sind zum Abschtzen der zweiten Signalkomponente durch Subtrahieren von sowohl einem ersten Trger (n+1) als auch einem zweiten Trger (n-1) in dem von den FFT-Berechnungsmitteln (2) ausgegebenen Signal, welche jeweils zu dem zu demodulierenden Trger (n) benachbart sind, einer Summe von Interferenzkomponenten mit Ausnahme von Signalen, welche von dem zu demodulierenden Trger (n) in den entsprechenden ersten oder zweiten Trger (n+1; n-1) streuen; und
Kombinationsmittel (11) zum Kombinieren der von den ersten Subtraktionsmitteln (8) ausgegebenen ersten Signalkomponente und der von den Signalkomponente-Abschtzungsmitteln (6, 7, 9, 10) ausgegebenen zweiten Signalkomponente.

2. Empfangsvorrichtung gem Anspruch 1, wobei die Signalkomponenten-Abschtzungsmittel umfassen:

Unerwnschte-Komponenten-Abschtzungsmittel (6, 7) zum Abschtzen der Interferenzkomponenten mit Ausnahme von Signalen, welche von dem Trger (n), welcher zu demodulieren ist, in den ersten und zweiten Trger (n+1, n-1) streuen, auf der Basis des von den bertragungspfad-Abschtzungsmitteln (1) ausgegebenen Abschtzungsergebnissignals der bertragungspfadeigenschaft, des den von den Einstreuungs-Koeffizienten-Berechnungsmitteln (4) ausgegebenen Einstreuungs-Koeffizienten angebenden Signals und des von den Korrekturmitteln (3) ausgegebenen korrigierten Signals des Frequenzbereichs; und
zweite Subtraktionsmitteln (9, 10) zum Subtrahieren von sowohl dem ersten als auch dem zweiten Trger (n+1, n-1) in dem von den FFT-Berechnungsmitteln (2) ausgegebenen Signal die Summe von Interferenzkomponenten mit Ausnahme von Signalen, welche von dem Trger (n), welcher zu demodulieren ist, in den entsprechenden ersten oder zweiten Trger (n+1, n-1) streuen.

3. Empfangsvorrichtung gem Anspruch 1 oder 2, weiter umfassend Gewichtungsmittel (12) zum Bestimmen eines Gewichtungskoeffizienten fr jeden Trger auf der Basis des von den Korrekturmitteln (3) ausgegebenen korrigierten Signals des Frequenzbereichs eines jeden Trgers und Multiplizieren des korrigierten Signals des Frequenzbereichs mit dem Gewichtungskoeffizienten, um das korrigierte Signal des Frequenzbereichs, welches in die Interferenzkomponenten-Bestimmungsmittel und die Signalkomponenten-Bestimmungsmittel eingegeben wird, zu gewichten.

4. Empfangsvorrichtung gem Anspruch 1 oder 2, weiter umfassend Schaltmittel (13) zum Empfangen des von den Korrekturmitteln (3) ausgegebenen korrigierten Signals des Frequenzbereichs und des von den Kombinationsmitteln (11) ausgegebenen Signals, wodurch entweder das von den Korrekturmitteln (3) ausgegebene korrigierte Signal des Frequenzbereichs oder das von den Kombinationsmitteln (11) ausgegebene Signal selektiv an die Signalkomponenten-Abschtzungsmittel (6, 7, 9, 10) ausgegeben wird.

5. Eine Empfangsvorrichtung zum Empfangen eines Signals, welches erhalten ist durch Einfgen eines bekannten Signals in ein Signal, welches erhalten ist durch Frequenz-Multiplexen einer Vielzahl von Trgern, verwendet zum Senden einer Datenbertragung bei gegebenen Intervallen auf der Zeitachse, oder eines Signals, welches erhalten ist durch Frequenz-Multiplexen durch Zuordnen eines bekannten Pilottrgers zu einer Vielzahl von gegebenen Trgern aus zum Senden von bertragungsdaten verwendeten Trgern, durch Verwenden einer Vielzahl von Antennen, wobei die Empfangsvorrichtung umfasst:

eine Vielzahl von Demodulationsmitteln (21, 22) jeweils korrespondierend zu der Vielzahl von Antennen;
eine Vielzahl von Dopplerverschiebung-Korrekturmitteln (24, 25) jeweils korrespondierend zu der Vielzahl von Demodulationsmitteln (21, 22);
erste Kombinationsmittel (23) zum Kombinieren von von der Vielzahl von Demodulationsmitteln (21, 22) ausgegebenen Signalen; und
zweite Kombinationsmittel (26) zum Kombinieren von von der Vielzahl von Dopplerverschiebung-Korrekturmitteln (24, 25) ausgegebenen Signalen;
wobei die Vielzahl von Demodulationsmitteln (21, 22) jeweils umfassen:
bertragungspfad-Abschtzungsmittel (1) zum Abschtzen einer bertragungspfadeigenschaft aus dem bekannten Signal oder dem in dem empfangenen Signal umfassten bekannten Pilottrger, wodurch ein Abschtzungsergebnissignal der bertragungspfadeigenschaft ausgegeben wird; und
FFT-Berechnungsmittel (2) zum Transformieren des empfangenen Signals in einen Frequenzbereich, wodurch

EP 2 509 240 B1

ein Signal des Frequenzbereichs ausgegeben wird;

erste Kombinationsmittel (23), kombinierend die von den FFT-Berechnungsmitteln (2) ausgegebenen Signale des Frequenzbereichs, auf der Basis des von den bertragungspfad-Abschtzungsmitteln (1), welche in jeder der Vielzahl von Demodulationsmitteln (21, 22) umfasst sind, ausgegebenen Abschtzungsergebnissignals der bertragungspfadeigenschaft;

wobei die Vielzahl von Dopplerverschiebung-Korrekturmitteln (24, 25) jeweils umfassen:

Einstreuungs-Koeffizienten-Berechnungsmittel (4) zum Berechnen eines Zwischentrgerinterferenz-Einstreuungs-Koeffizienten auf der Basis des von den bertragungspfad-Abschtzungsmitteln (1), welche in den korrespondierenden Demodulationsmitteln der Vielzahl von Demodulationsmitteln (21, 22) umfasst sind, ausgegebenen Abschtzungsergebnissignals der bertragungspfadeigenschaft, wodurch ein den Einstreuungs-Koeffizienten angebendes Signal ausgegeben wird;

Interferenzkomponenten-Abschtzungsmittel (5) zum Abschtzen einer in dem zu demodulierenden Trger (n) umfassten Interferenzkomponente auf der Basis des von den Einstreuungs-Koeffizienten-Berechnungsmitteln (4) ausgegebenen Einstreuungs-Koeffizienten angebenden Signals und des von den ersten Kombinationsmitteln (23) ausgegebenen Signals;

Subtraktionsmittel (8) zum Erhalten einer in dem zu demodulierenden Trger (n) umfassten gewnschten Signalkomponente durch Subtrahieren des durch die Interferenzkomponenten-Abschtzungsmittel (5) abgeschtzten Interferenzkomponentensignals von dem von den FFT-Berechnungsmitteln (2), welche in den korrespondierenden Demodulationsmitteln umfasst sind, ausgegebenen Signal des Frequenzbereichs;

Signalkomponente-Abschtzungsmittel (6, 7, 9, 10) zum Abschtzen einer in einer Vielzahl von Trgern mit Ausnahme des zu demodulierenden Trgers (n) umfassten gewnschten zweiten Signalkomponente auf der Basis des von den FFT-Berechnungsmitteln (2), welche in den korrespondierenden Demodulationsmitteln umfasst sind, ausgegebenen Signals des Frequenzbereichs, des von den bertragungspfad-Abschtzungsmitteln (1) ausgegebenen Abschtzungsergebnissignals der bertragungspfadeigenschaft, des von den Einstreuungs-Koeffizienten-Berechnungsmitteln (4) ausgegebenen den Einstreuungs-Koeffizienten angebenden Signals und des von den ersten Kombinationsmitteln (23) ausgegebenen Signals, wobei die Signalkomponente-Abschtzungsmittel (6, 7, 9, 10) angeordnet sind zum Abschtzen der zweiten Signalkomponente durch Subtrahieren von sowohl einem ersten Trger (n+1) als auch einem zweiten Trger (n-1) in dem von den FFT-Berechnungsmitteln (2) ausgegebenen Signal, welche jeweils zu dem zu demodulierenden Trger (n) benachbart sind, einer Summe von Interferenzkomponenten mit Ausnahme von Signalen, welche von dem zu demodulierenden Trger (n) in den entsprechenden ersten oder zweiten Trger (n+1; n-1) streuen; und

dritte Kombinationsmittel (11) zum Kombinieren des von den Subtraktionsmitteln (8) ausgegebenen Signals und des von den Signalkomponenten-Abschtzungsmitteln (6, 7, 9, 10) ausgegebenen Signals;

zweite Kombinationsmittel (26), welche zum Kombinieren von von den dritten Kombinationsmitteln (11), welche in der Vielzahl von Dopplerverschiebung-Korrekturmitteln (24, 25) umfasst sind, ausgegebenen Signalen auf der Basis von von den bertragungspfad-Abschtzungsmitteln (1), welche in jeweils der Vielzahl von Demodulationsmitteln (21, 22) umfasst sind, ausgegebenen Abschtzungsergebnissignalen der bertragungspfadeigenschaft ausgebildet sind.

6.  Ein Empfangsverfahren zum Empfangen eines Signals, welches erhalten ist durch Einfgen eines bekannten Signals in ein Signal, welches erhalten ist durch Frequenz-Multiplexen einer Vielzahl von Trgern, verwendet zum Senden einer Datenbertragung bei gegebenen Intervallen auf der Zeitachse, oder eines Signals, welches erhalten ist durch Frequenz-Multiplexen durch Zuordnen eines bekannten Pilottrgers zu einer Vielzahl von gegebenen Trgern aus zum Senden von bertragungsdaten verwendeten Trgern, wobei das Empfangsverfahren umfasst:

einen bertragungspfad-Abschtzungsschritt zum Abschtzen einer bertragungspfadeigenschaft aus dem bekannten Signal oder dem in dem empfangenen Signal umfassten Pilottrger, wodurch ein Abschtzungsergebnissignal der bertragungspfadeigenschaft ausgegeben wird;

einen FFT-Berechnungsschritt zum Transformieren des empfangenen Signals in einen Frequenzbereich, wodurch ein Signal des Frequenzbereichs ausgegeben wird;

einen Korrekturschritt zum Korrigieren einer Strung des Signals des Frequenzbereichs, erzeugt in dem FFT-Berechnungsschritt, auf der Basis des Abschtzungsergebnissignals der bertragungspfadeigenschaft, ausgegeben von dem bertragungspfad-Abschtzungsschritt;

einen Einstreuungs-Koeffizienten-Berechnungsschritt zum Berechnen eines Zwischentrgerinterferenz-Einstreuungs-Koeffizienten auf der Basis des Abschtzungsergebnissignals der bertragungspfadeigenschaft, erzeugt in dem bertragungspfad-Abschtzungsschritt, wodurch ein den Einstreuungs-Koeffizienten angebendes Signal ausgegeben wird;

Interferenzkomponenten-Abschtzungsschritt zum Abschtzen einer in dem zu demodulierenden Trger (n) umfassten Interferenzkomponente auf der Basis des den Einstreuungs-Koeffizienten angebenden Signals, erzeugt in dem Einstreuungs-Koeffizienten-Berechnungsschritt, und des korrigierten Signals des Frequenzbereichs, erzeugt in dem Korrekturschritt;

einen ersten Subtraktionsschritt zum Erhalten einer in dem zu demodulierenden Trger (n) umfassten gewnschten ersten Signalkomponente durch Subtrahieren der in dem Interferenzkomponenten-Abschtzungsschritt abgeschtzten Interferenzkomponente von dem in dem FFT-Berechnungsschritt erzeugten Signal des Frequenzbereichs;

einen Signalkomponente-Abschtzungsschritt zum Abschtzen einer in einer Vielzahl von Trgern mit Ausnahme des zu demodulierenden Trgers (n) umfassten gewnschten zweiten Signalkomponente auf der Basis des von dem FFT-Berechnungsschritt ausgegebenen Signals des Frequenzbereichs, des in dem bertragungspfad-Abschtzungsschritt erzeugten Abschtzungsergebnissignals der bertragungspfadeigenschaft, des den Einstreuungs-Koeffizienten angebenden in dem Einstreuungs-Koeffizienten-Berechnungsschritt erzeugten Signals und des in dem Korrekturschritt erzeugten korrigierten Signals des Frequenzbereichs, wobei die zweite Signalkomponente durch Subtrahieren von sowohl einem ersten Trger (n+1) als auch einem zweiten Trger (n-1) in dem von den FFT-Berechnungsmitteln (2) ausgegebenen Signal, welche zu dem zu demodulierenden Trger (n) benachbart sind, einer Summe von Interferenzkomponenten mit Ausnahme von Signalen, welche von dem zu demodulierenden Trger (n) in den entsprechenden ersten oder zweiten Trger (n+1; n-1) streuen, abgeschtzt wird; und

einen Kombinationsschritt zum Erzeugen eines kombinierten Signals durch Kombinieren der in dem ersten Subtraktionsschritt erzeugten ersten Signalkomponente und der in dem Signalkomponenten-Abschtzungsschritt erzeugten zweiten Signalkomponente.

7. Empfangsverfahren gem Anspruch 6, wobei der Signalkomponenten-Abschtzungsschritt umfasst:

einen Unerwnschte-Komponente-Abschtzungsschritt zum Abschtzen der Interferenzkomponenten mit Ausnahme von Signalen, welche von dem Trger (n), welcher zu demodulieren ist, in den ersten und zweiten Trger (n+1, n-1) streuen, auf der Basis des in dem bertragungspfad-Abschtzungsschritt erzeugten Abschtzungsergebnissignals der bertragungspfadeigenschaft, des in dem Einstreuungs-Koeffizienten-Berechnungsschritt erzeugten den Einstreuungs-Koeffizienten angebenden Signals und des in dem Korrekturschritt erzeugten korrigierten Signal des Frequenzbereichs; und

einen zweiten Subtraktionsschritt zum Subtrahieren von sowohl dem ersten als auch dem zweiten Trger (n+1, n-1) in dem von den FFT-Berechnungsmitteln (2) ausgegebenen Signal die Summe von Interferenzkomponenten mit Ausnahme von Signalen, welche von dem Trger (n), welcher zu demodulieren ist, in den entsprechenden ersten oder zweiten Trger (n+1; n-1) streuen.

8. Empfangsverfahren gem Anspruch 6 oder 7, weiter umfassend einen Gewichtungsschritt zum Bestimmen eines Gewichtungskoeffizienten eines jeden Trgers auf der Basis des in dem Korrekturschritt erzeugten korrigierten Signals des Frequenzbereichs eines jeden Trgers und Multiplizieren des korrigierten Signals des Frequenzbereichs mit dem Gewichtungskoeffizienten, um das korrigierte Signal des Frequenzbereichs, welches in dem Interferenzkomponenten-Abschtzungsschritt und dem Signalkomponente-Abschtzungsschritt verwendet wird, zu gewichten.

9. Empfangsverfahren gem Anspruch 6 oder 7, weiter umfassend:

Erzeugen einer zweiten Abschtzung der Interferenzkomponente auf der Basis des in dem Einstreuungs-Koeffizienten-Berechnungsschritt erzeugten den Einstreuungs-Koeffizienten angebenden Signals und des in dem Kombinationsschritt erzeugten kombinierten Signals;

Erhalten einer zweiten Abschtzung der ersten Signalkomponente durch Subtrahieren der zweiten Abschtzung der Interferenzkomponente von dem in dem FFT-Berechnungsschritt erzeugten Signal des Frequenzbereichs;

Erzeugen einer zweiten Abschtzung der zweiten Signalkomponente auf der Basis des von dem FFT-Berechnungsschritt ausgegebenen Signals des Frequenzbereichs, des in dem bertragungspfad-Abschtzungsschritt erzeugten Abschtzungsergebnissignals der bertragungspfadeigenschaft, des in dem Einstreuungs-Koeffizienten-Berechnungsschritt erzeugten den Einstreuungs-Koeffizienten angebenden Signals und des in dem Kombinationsschritt erzeugten kombinierten Signals; und

Kombinieren der zweiten Abschtzung der ersten Signalkomponente und der zweiten Abschtzung des zweiten Signals.

10. Ein Empfangsverfahren zum Empfangen eines Signals, welches erhalten ist durch Einfgen eines bekannten Signals in ein Signal, welches erhalten ist durch Frequenz-Multiplexen einer Vielzahl von Trgern, verwendet zum Senden einer Datenbertragung bei gegebenen Intervallen auf der Zeitachse, oder eines Signals, welches erhalten ist durch Frequenz-Multiplexen durch Zuordnen eines bekannten Pilottrgers zu einer Vielzahl von gegebenen Trgern aus zum Senden von bertragungsdaten verwendeten Trgern, durch Verwenden einer Vielzahl von Antennen, wobei das Empfangsverfahren umfasst:

einen Demodulationsschritt zum Erzeugen einer Vielzahl von Demodulationssignalen jeweils korrespondierend zu der Vielzahl von Antennen;
einen Dopplerverschiebung-Korrekturschritt zum Ausfhren einer Dopplerverschiebungskorrektur an der Vielzahl von Demodulationssignalen;
einen ersten Kombinationsschritt zum Kombinieren einer Vielzahl von in dem Demodulationsschritt erzeugten Demodulationssignalen; und
einen zweiten Kombinationsschritt zum Kombinieren von in dem Dopplerverschiebung-Korrekturschritt erzeugten Kombinationssignalen;
wobei der Demodulationsschritt umfasst:

einen bertragungspfad-Abschtzungsschritt zum Abschtzen einer bertragungspfadeigenschaft von dem bekannten Signal oder dem in dem empfangenen Signal umfassten Pilottrger, wodurch ein Abschtzungsergebnissignal der bertragungspfadeigenschaft ausgegeben wird; und
einen FFT-Berechnungsschritt zum Transformieren des empfangenen Signals in einen Frequenzbereich, wodurch ein Signal des Frequenzbereichs ausgegeben wird;

wobei der erste Kombinationsschritt umfasst:

einen Schritt zum Kombinieren der in dem FFT-Berechnungsschritt erzeugten Signale des Frequenzbereichs auf der Basis des in dem bertragungspfad-Abschtzungsschritt erzeugten Signals;

wobei der Dopplerverschiebung-Korrekturschritt umfasst:

einen Einstreuungs-Koeffizienten-Berechnungsschritt zum Berechnen eines Zwischentrgerinterferenz-Einstreuungs-Koeffizienten auf der Basis des in dem bertragungspfad-Abschtzungsschritt erzeugten Signals, wodurch ein den Einstreuungs-Koeffizienten angebendes Signal ausgegeben wird;
einen Interferenzkomponenten-Abschtzungsschritt zum Abschtzen einer in dem zu demodulierenden Trger (n) umfassten Interferenzkomponente auf der Basis des in dem Einstreuungs-Koeffizienten-Berechnungsschritt erzeugten den Einstreuungs-Koeffizienten angebenden Signals und des von dem ersten Kombinationsschritt ausgegebenen Signals;
einen Subtraktionsschritt zum Erhalten einer in dem zu demodulierenden Trger (n) umfassten gewnschten Signalkomponente durch Subtrahieren des in dem Interferenzkomponenten-Abschtzungsschritt abgeschtzten Interferenzkomponentensignals von dem in dem FFT-Berechnungsschritt erzeugten Signal des Frequenzbereichs;
einen Signalkomponente-Abschtzungsschritt zum Abschtzen einer in einer Vielzahl von Trgern mit Ausnahme des zu demodulierenden Trgers (n) umfassten gewnschten zweiten Signalkomponente auf der Basis des in dem FFT-Berechnungsschritt erzeugten Signal des Frequenzbereichs, des in dem bertragungspfad-Abschtzungsschritt erzeugten Signals des Frequenzbereichs, des in dem Einstreuungs-Koeffizienten-Berechnungsschritt erzeugten den Einstreuungs-Koeffizienten angebenden Signals und des in dem ersten Kombinationsschritt erzeugten Signals, wobei die Signalkomponente-Abschtzungsmittel (6, 7, 9, 10) angeordnet sind zum Abschtzen der zweiten Signalkomponente durch Subtrahieren von sowohl einem ersten Trger (n+1) als auch einem zweiten Trger (n-1) in dem von den FFT-Berechnungsmitteln (2) ausgegebenen Signal, welche zu dem zu demodulierenden Trger (n) benachbart sind, einer Summe von Interferenzkomponenten mit Ausnahme von Signalen, welche von dem zu demodulierenden Trger (n) in den entsprechenden ersten oder zweiten Trger (n+1; n-1) streuen; und
einen dritten Kombinationsschritt zum Kombinieren von von dem Subtraktionsschritt und dem Signalkomponenten-Abschtzungsschritt ausgegebenen Signalen;
wobei der zweite Kombinationsschritt einen Schritt zum Kombinieren von in dem dritten Kombinationsschritt erzeugten Signalen auf der Basis des in dem bertragungspfad-Abschtzungsschritt erzeugten Abschtzungsergebnissignals der bertragungspfadeigenschaft umfasst.

**11.** Eine Empfangsvorrichtung zum Empfangen eines Signals, welches erhalten ist durch Einfgen eines bekannten Signals in ein Signal, welches erhalten ist durch Frequenz-Multiplexen einer Vielzahl von Trgern, verwendet zum Senden einer Datenbertragung bei gegebenen Intervallen auf der Zeitachse, oder eines Signals, welches erhalten ist durch Frequenz-Multiplexen durch Zuordnen eines bekannten Pilottrgers zu einer Vielzahl von gegebenen Trgern aus zum Senden von bertragungsdaten verwendeten Trgern, wobei die Empfangsvorrichtung umfasst:

bertragungspfad-Abschtzungsmittel (1) zum Abschtzen einer bertragungspfadeigenschaft von dem bekannten Signal oder dem in dem empfangenen Signal umfassten Pilottrger, wodurch ein Abschtzungsergebnissignal der bertragungspfadeigenschaft ausgegeben wird;

FFT-Berechnungsmittel (2) zum Transformieren des empfangenen Signals in einen Frequenzbereich, wodurch ein Signal des Frequenzbereichs ausgegeben wird;

Korrekturmittel (3) zum Korrigieren einer Strung des von den FFT-Berechnungsmitteln (2) ausgegebenen Signals des Frequenzbereichs auf der Basis des von den bertragungspfad-Abschtzungsmitteln (1) ausgegebenen Abschtzungsergebnissignals der bertragungspfadeigenschaft;

Einstreuungs-Koeffizienten-Berechnungsmittel (100) zum Berechnen eines Zwischentrgerinterferenz-Einstreuungs-Koeffizienten auf der Basis des von den bertragungspfad-Abschtzungsmitteln (1) ausgegebenen Abschtzungsergebnissignals der bertragungspfadeigenschaft und von FFT-Fensterpositionsinformationen in den FFT-Berechnungsmittel (2), wodurch ein den Einstreuungs-Koeffizienten angebendes Signal ausgegeben wird;

Interferenzkomponenten-Abschtzungsmittel (5) zum Abschtzen einer in dem zu demodulierenden Trger (n) umfassten Interferenzkomponente auf der Basis des von den Einstreuungs-Koeffizienten-Berechnungsmitteln (100) ausgegebenen den Einstreuungs-Koeffizienten angebenden Signals und des von den Korrekturmitteln (3) ausgegebenen korrigierten Signals des Frequenzbereichs;

erste Subtraktionsmittel (8) zum Erhalten einer in dem zu demodulierenden Trger (n) umfassten gewnschten ersten Signalkomponente durch Subtrahieren der durch die Interferenzkomponenten-Abschtzungsmittel (5) abgeschtzten Interferenzkomponente von dem von den FFT-Berechnungsmitteln (2) ausgegebenen Signal des Frequenzbereichs;

Signalkomponente-Abschtzungsmittel (6, 7, 9, 10) zum Abschtzen einer in einer Vielzahl von Trgern mit Ausnahme des zu demodulierenden Trgers (n) umfassten gewnschten zweiten Signalkomponente auf der Basis des von den FFT-Berechnungsmitteln (2) ausgegebenen Signals des Frequenzbereichs, des von den bertragungspfad-Abschtzungsmitteln (1) ausgegebenen Abschtzungsergebnissignals der bertragungspfadeigenschaft, des von den Einstreuungs-Koeffizienten-Berechnungsmitteln (100) ausgegebenen den Einstreuungs-Koeffizienten angebenden Signals und des von den Korrekturmitteln (3) ausgegebenen korrigierten Signals des Frequenzbereichs, wobei die Signalkomponente-Abschtzungsmittel (6, 7, 9, 10) angeordnet sind zum Abschtzen der zweiten Signalkomponente durch Subtrahieren von sowohl einem ersten Trger (n+1) als auch einem zweiten Trger (n-1) in dem von den FFT-Berechnungsmittel (2) ausgegebenen Signal, welche zu dem zu demodulierenden Trger (n) benachbart sind, einer Summe von Interferenzkomponenten mit Ausnahme von Signalen, welche von dem zu demodulierenden Trger (n) in den entsprechenden ersten oder zweiten Trger (n+1; n-1) streuen; und

Kombinationsmittel (11) zum Kombinieren der von den ersten Subtraktionsmitteln (8) ausgegebenen ersten Signalkomponente und der von den Signalkomponente-Abschtzungsmitteln (6, 7, 9, 10) ausgegebenen zweiten Signalkomponente.

**12.** Eine Empfangsvorrichtung zum Empfangen eines Signals, welches erhalten ist durch Einfgen eines bekannten Signals in ein Signal, welches erhalten ist durch Frequenz-Multiplexen einer Vielzahl von Trgern, verwendet zum Senden einer Datenbertragung bei gegebenen Intervallen auf der Zeitachse, oder eines Signals, welches erhalten ist durch Frequenz-Multiplexen durch Zuordnen eines bekannten Pilottrgers zu einer Vielzahl von gegebenen Trgern aus zum Senden von bertragungsdaten verwendeten Trgern, wobei die Empfangsvorrichtung umfasst:

bertragungspfad-Abschtzungsmittel (1) zum Abschtzen einer bertragungspfadeigenschaft von dem bekannten Signal oder dem in dem empfangenen Signal umfassten Pilottrger, wodurch ein Abschtzungsergebnissignal der bertragungspfadeigenschaft ausgegeben wird;

FFT-Berechnungsmittel (2) zum Transformieren des empfangenen Signals in einen Frequenzbereich, wodurch ein Signal des Frequenzbereichs ausgegeben wird;

Korrekturmittel (3) zum Korrigieren einer Strung des von den FFT-Berechnungsmitteln (2) ausgegebenen Signals des Frequenzbereichs auf der Basis des von den bertragungspfad-Abschtzungsmitteln (1) ausgegebenen Abschtzungsergebnissignals der bertragungspfadeigenschaft;

FFT-Fensterposition-Detektionsmittel (103) zum Detektieren einer FFT-Fensterposition in den FFT-Berechnungsmitteln (2) auf der Basis des von den bertragungspfad-Abschtzungsmitteln (1) ausgegebenen Abschtzungsergebnissignals der bertragungspfadeigenschaft, wodurch FFT-Fensterpositionsinformationen ausgegeben werden;

Einstreuungs-Koeffizienten-Berechnungsmittel (100) zum Berechnen eines Zwischentrgerinterferenz-Einstreuungs-Koeffizienten auf der Basis des von den bertragungspfad-Abschtzungsmitteln (1) ausgegebenen Abschtzungsergebnissignals der bertragungspfadeigenschaft und den FFT-Fensterpositionsinformationen, wodurch ein den Einstreuungs-Koeffizienten angebendes Signal ausgegeben wird;

Interferenzkomponenten-Abschtzungsmitteln (5) zum Abschtzen einer in dem zu demodulierenden Trger (n) umfassten Interferenzkomponente auf der Basis des von den Einstreuungs-Koeffizienten-Berechnungsmitteln (100) ausgegebenen den Einstreuungs-Koeffizienten angebenden Signals des von den Korrekturmitteln (3) ausgegebenen korrigierten Signals des Frequenzbereichs;

erste Subtraktionsmittel (8) zum Erhalten einer in dem zu demodulierenden Trger (n) umfassten gewnschten ersten Signalkomponente durch Subtrahieren der durch die Interferenzkomponenten-Abschtzungsmittel (5) abgeschtzten Interferenzkomponente von dem von den FFT-Berechnungsmitteln (2) ausgegebenen Signal des Frequenzbereichs;

Signalkomponente-Abschtzungsmittel (6, 7, 9, 10) zum Abschtzen einer in einer Vielzahl von Trgern mit Ausnahme des zu demodulierenden Trgers (n) umfassten gewnschten zweiten Signalkomponente auf der Basis des von den FFT-Berechnungsmitteln (2) ausgegebenen Signals des Frequenzbereichs, des von den bertragungspfad-Abschtzungsmitteln (1) ausgegebenen Abschtzungsergebnissignals der bertragungspfadeigenschaft, des von den Einstreuungs-Koeffizienten-Berechnungsmitteln (100) ausgegebenen den Einstreuungs-Koeffizienten angebenden Signals und des von den Korrekturmitteln (3) ausgegebenen korrigierten Signals des Frequenzbereichs, wobei die Signalkomponente-Abschtzungsmittel (6, 7, 9, 10) angeordnet sind zum Abschtzen der zweiten Signalkomponente durch Subtrahieren von sowohl einem ersten Trger (n+1) als auch einem zweiten Trger (n-1) in dem von den FFT-Berechnungsmitteln (2) ausgegebenen Signal, welche zu dem zu demodulierenden Trger (n) benachbart sind, einer Summe von Interferenzkomponenten mit Ausnahme von Signalen, welche von dem zu demodulierenden Trger (n) in den entsprechenden ersten oder zweiten Trger (n+1; n-1) streuen; und

Kombinationsmittel (11) zum Kombinieren der von dem ersten Subtraktionsmitteln (8) ausgegebenen ersten Signalkomponente und der von den Signalkomponente-Abschtzungsmitteln (6, 7, 9, 10) ausgegebenen zweiten Signalkomponente.

**13.** Empfangsvorrichtung gem Anspruch 11 oder 12, wobei die Einstreuungs-Koeffizienten-Berechnungsmittel (100) umfassen:

zumindest ein Verzgerungsmittel (101a, 101b) zum Ausgeben der Ausgabe der bertragungspfad-Abschtzungsmittel (1) nach einer Verzgerung eines einzelnen Symbolintervalls;

zumindest ein Phasenkorrekturmittel (102a, 102b) zum Vergeben der Ausgabe der bertragungspfad-Abschtzungsmittel (1) einer umgekehrten Phasenrotation von der Phasenrotation der Ausgabe der bertragungspfad-Abschtzungsmittel, welche aus der Differenz von dem vorhergehenden Symbol oder der Differenz der als die FFT-Fensterpositionsinformationen erhaltenen FFT-Fensterposition von der Referenzposition resultiert;

Differenzberechnungsmittel (32) zum Berechnen der Differenz zwischen dem Abschtzungsergebnissignal der bertragungspfadeigenschaft, dessen Phase durch die Phasenkorrekturmittel (102a, 102b) korrigiert wurde, und dem Abschtzungsergebnissignal der bertragungspfadeigenschaft, welches durch die Verzgerungsmittel (101a, 101b) in Einheiten von Symbolen verzgert wurde und durch die Phasenkorrekturmittel phasen-korrigiert wurde; und

Konstanten-Matrix-Multiplikationsmittel (33) zum Multiplizieren der Ausgabe der Differenzberechnungsmittel (32) mit einer Konstanten-Matrix.

**14.** Empfangsvorrichtung gem Anspruch 12, wobei die FFT-Fensterposition-Erkennungsmittel (103) umfassen:

Invers-Fourier-Transformationsmittel (104) zum Ausfhren einer inversen Fouriertransformation an der Ausgabe der bertragungspfad-Abschtzungsmittel (1);

Niveauberechnungsmittel (105) zum Berechnen des Quadratwerts des Absolutwerts des komplexen Signals, welches die Ausgabe der Invers-Fourier-Transformationsmittel (104) ist, oder des Absolutwerts des komplexen Signals; und

Fensterposition-Bestimmungsmittel (106) zum Detektieren einer FFT-Fensterposition von einer nderung in der Ausgabe der Niveauberechnungsmittel (105) oder des Indexes der inversen Fouriertransformation, welcher den maximalen Wert der Ausgabe der Niveauberechnungsmittel (105) ergibt.

**Revendications**

**1.** Dispositif de rception destin recevoir un signal obtenu en insrant un signal connu dans un signal obtenu par multiplexage en frquence d'une pluralit de porteuses utilises en vue d'envoyer des donnes d'mission, des intervalles donns sur l'axe temporel, ou un signal obtenu par multiplexage en frquence en affectant une porteuse pilote connue une pluralit de porteuses donnes parmi les porteuses utilises pour envoyer des donnes d'mission, le dispositif de rception comportant :

un moyen d'estimation de chemin d'mission (1) pour estimer une proprit de chemin d'mission partir du signal connu ou de la porteuse pilote connue incluse dans le signal reu, ce qui permet par consquent de gnrer en sortie un signal de rsultat d'estimation de la proprit de chemin d'mission ;
un moyen de calcul de transforme FFT (2) pour transformer le signal reu en un signal de domaine frquentiel, ce qui permet par consquent de gnrer en sortie un signal du domaine frquentiel ;
un moyen de correction (3) pour corriger une dformation du signal du domaine frquentiel gnr en sortie partir du moyen de calcul de transforme FFT (2) sur la base du signal de rsultat d'estimation de la proprit de chemin d'mission gnr en sortie partir du moyen d'estimation de chemin d'mission (1) ;
un moyen de calcul de coefficient de fuite (4) pour calculer un coefficient de fuite d'interfrence entre porteuses sur la base du signal de rsultat d'estimation de la proprit de chemin d'mission gnr en sortie partir du moyen d'estimation de chemin d'mission (1), ce qui permet par consquent de gnrer en sortie un signal indiquant le coefficient de fuite ;
un moyen d'estimation de composante d'interfrence (5) pour estimer une composante d'interfrence incluse dans la porteuse (n) devant tre dmodule, sur la base du signal indiquant le coefficient de fuite gnr en sortie partir du moyen de calcul de coefficient de fuite (4) et du signal corrig du domaine frquentiel gnr en sortie partir du moyen de correction (3) ;
un premier moyen de soustraction (8) pour obtenir une premire composante de signal souhaite incluse dans la porteuse (n) devant tre dmodule, en soustrayant la composante d'interfrence estime par le moyen d'estimation de composante d'interfrence (5) du signal du domaine frquentiel gnr en sortie partir du moyen de calcul de transforme FFT (1) ;
un moyen d'estimation de composante de signal (6, 7, 9, 10) pour estimer une seconde composante de signal souhaite incluse dans une pluralit de porteuses autres que la porteuse (n) devant tre dmodule, sur la base du signal du domaine frquentiel gnr en sortie partir du moyen de calcul de transforme FFT (2), du signal de rsultat d'estimation de la proprit de chemin d'mission gnr en sortie partir du moyen d'estimation de chemin d'mission (1), du signal indiquant le coefficient de fuite gnr en sortie partir du moyen de calcul de coefficient de fuite (4), et du signal corrig du domaine frquentiel gnr en sortie partir du moyen de correction (3), le moyen d'estimation de composante de signal (6, 7, 9, 10) tant agenc de manire estimer la seconde composante de signal en soustrayant, de chaque porteuse prise parmi une premire porteuse (n + 1) et une seconde porteuse (n - 1) dans le signal gnr en sortie partir du moyen de calcul de transforme FFT (2) lesquelles sont chacune adjacentes la porteuse (n) devant tre dmodule, une somme de composantes d'interfrence distinctes de signaux fuyant partir de la porteuse (n) devant tre dmodule au niveau de la premire porteuse ou de la seconde porteuse respective (n + 1 ; n - 1) ; et
un moyen de combinaison (11) pour combiner la premire composante de signal gnre en sortie partir du premier moyen de soustraction (8) et la seconde composante de signal gnre en sortie partir du moyen d'estimation de composante de signal (6, 7, 9, 10).

**2.** Dispositif de rception selon la revendication 1, dans lequel le moyen d'estimation de composante de signal inclut :

un moyen d'estimation de composantes non souhaites (6, 7) pour estimer les composantes d'interfrence autres que les signaux fuyant partir de la porteuse (n) qui doit tre dmodule au niveau des premire et seconde porteuses (n + 1, n - 1), sur la base du signal de rsultat d'estimation de la proprit de chemin d'mission gnr en sortie partir du moyen d'estimation de chemin d'mission (1), du signal indiquant le coefficient de fuite gnr en sortie partir du moyen de calcul de coefficient de fuite (4), et du signal corrig du domaine frquentiel gnr en sortie partir du moyen de correction (3) ; et
un second moyen de soustraction (9, 10) pour soustraire, de chacune des premire et seconde porteuses (n + 1, n - 1) dans le signal gnr en sortie partir du moyen de calcul de transforme FFT (2), la somme de composantes d'interfrence autres que les signaux fuyant partir de la porteuse (n) qui doit tre dmodule au niveau de la premire porteuse ou de la seconde porteuse respective (n + 1 ; n - 1).

**3.** Dispositif de rception selon la revendication 1 ou 2, comportant en outre un moyen de pondration (12) pour dterminer un coefficient de pondration de chaque porteuse sur la base du signal corrig du domaine frquentiel de chaque porteuse gnr en sortie partir du moyen de correction (3) et pour multiplier le signal corrig du domaine frquentiel par le coefficient de pondration de manire pondrer le signal corrig du domaine frquentiel introduit dans le moyen d'estimation de composante d'interfrence et dans le moyen d'estimation de composante de signal.

**4.** Dispositif de rception selon la revendication 1 ou 2, comportant en outre un moyen de commutation (13) pour recevoir le signal corrig du domaine frquentiel gnr en sortie du moyen de correction (3) et le signal gnr en sortie du moyen de combinaison (11), ce qui permet par consquent de gnrer en sortie le signal corrig du domaine frquentiel gnr en sortie du moyen de correction (3) ou le signal gnr en sortie du moyen de combinaison (11), de manire slective, vers le moyen d'estimation de composante de signal (6, 7, 9, 10).

**5.** Dispositif de rception pour recevoir un signal obtenu en insrant un signal connu dans un signal obtenu par multiplexage en frquence d'une pluralit de porteuses utilises en vue d'envoyer des donnes d'mission, des intervalles donns sur l'axe temporel, ou un signal obtenu par multiplexage en frquence en affectant une porteuse pilote connue une pluralit de porteuses donnes parmi les porteuses utilises en vue d'envoyer des donnes d'mission, en faisant appel une pluralit d'antennes, le dispositif de rception comportant :

une pluralit de moyens de dmodulation (21, 22) correspondant respectivement la pluralit d'antennes ;
une pluralit de moyens de correction de dcalage par effet Doppler (24, 25) correspondant respectivement la pluralit de moyens de dmodulation (21, 22) ;
un premier moyen de combinaison (23) pour combiner des signaux gnrs en sortie de la pluralit de moyens de dmodulation (21, 22) ; et
un deuxime moyen de combinaison (26) pour combiner des signaux gnrs en sortie de la pluralit de moyens de correction de dcalage par effet Doppler (24, 25) ;
chaque moyen de la pluralit de moyens de dmodulation (21, 22) incluant :

un moyen d'estimation de chemin d'mission (1) pour estimer une proprit de chemin d'mission partir du signal connu ou partir de la porteuse pilote incluse dans le signal reu, ce qui permet par consquent de gnrer en sortie un signal de rsultat d'estimation de la proprit de chemin d'mission ; et
un moyen de calcul de transforme FFT (2) pour transformer le signal reu en un signal de domaine frquentiel, ce qui permet par consquent de gnrer en sortie un signal du domaine frquentiel ;
le premier moyen de combinaison (23) combinant les signaux du domaine frquentiel gnrs en sortie du moyen de calcul de transforme FFT (2), sur la base du signal de rsultat d'estimation de la proprit de chemin d'mission gnr en sortie partir du moyen d'estimation de chemin d'mission (1) inclus dans chaque moyen de la pluralit de moyens de dmodulation (21, 22) ;

chaque moyen de la pluralit de moyens de correction de dcalage par effet Doppler (24, 25) incluant :

un moyen de calcul de coefficient de fuite (4) pour calculer un coefficient de fuite d'interfrence entre porteuses sur la base du signal de rsultat d'estimation de la proprit de chemin d'mission gnr en sortie du moyen d'estimation de chemin d'mission (1) inclus dans le moyen de dmodulation correspondant de la pluralit de moyens de dmodulation (21, 22), ce qui permet par consquent de gnrer en sortie un signal indiquant le coefficient de fuite ;
un moyen d'estimation de composante d'interfrence (5) pour estimer une composante d'interfrence incluse dans la porteuse (n) devant tre dmodule, sur la base du signal indiquant le coefficient gnr en sortie du moyen de calcul de coefficient de fuite (4) et du signal gnr en sortie du premier moyen de combinaison (23) ;
un moyen de soustraction (8) pour obtenir une composante de signal souhaite incluse dans la porteuse (n) devant tre dmodule, en soustrayant le signal de composante d'interfrence estim par le moyen d'estimation de composante d'interfrence (5) du signal du domaine frquentiel gnr en sortie du moyen de calcul de transforme FFT (2) inclus dans le moyen de dmodulation correspondant ;
un moyen d'estimation de composante de signal (6, 7, 9, 10) pour estimer une seconde composante de signal souhaite incluse dans une pluralit de porteuses autres que la porteuse (n) devant tre dmodule, sur la base du signal du domaine frquentiel gnr en sortie du moyen de calcul de transforme FFT (2) inclus dans le moyen de dmodulation correspondant, du signal de rsultat d'estimation de la proprit de chemin d'mission gnr en sortie du moyen d'estimation de chemin d'mission (1), du signal indiquant le coefficient de fuite gnr en sortie du moyen de calcul de coefficient de fuite (4), et du signal gnr en sortie du premier moyen de combinaison (23), le moyen d'estimation de composante de signal (6, 7, 9, 10) tant agenc pour estimer la seconde composante de signal en soustrayant, de chaque porteuse parmi une premire porteuse (n + 1) et une seconde porteuse (n - 1) dans le signal gnr en sortie du moyen de calcul de transforme FFT (2) lesquelles sont chacune adjacentes la porteuse (n) devant tre dmodule, une somme de composantes d'interfrence distinctes de signaux fuyant partir de la porteuse (n) devant tre dmodule au niveau de la premire porteuse ou de la seconde porteuse respective (n + 1 ; n - 1) ; et

un troisime moyen de combinaison (11) pour combiner le signal gnr en sortie partir du moyen de soustraction (8) et le signal gnr en sortie partir du moyen d'estimation de composante de signal (6, 7, 9, 10) ;

le deuxime moyen de combinaison (26) tant agenc de manire combiner des signaux gnrs en sortie du troisime moyen de combinaison (11) inclus dans la pluralit de moyens de correction de dcalage par effet Doppler (24, 25), sur la base de signaux de rsultats d'estimation de la proprit de chemin d'mission gnrs en sortie du moyen d'estimation de chemin d'mission (1) inclus dans chaque moyen de la pluralit de moyens de dmodulation (21, 22).

6.  Procd de rception pour recevoir un signal obtenu en insrant un signal connu dans un signal obtenu par multiplexage en frquence d'une pluralit de porteuses utilises en vue d'envoyer des donnes d'mission, des intervalles donns sur l'axe temporel, ou un signal obtenu par multiplexage en frquence en affectant une porteuse pilote connue une pluralit de porteuses donnes parmi les porteuses utilises en vue d'envoyer des donnes d'mission, le procd de rception comportant :

une tape d'estimation de chemin d'mission consistant estimer une proprit de chemin d'mission partir du signal connu ou partir de la porteuse pilote incluse dans le signal reu, ce qui permet par consquent de gnrer en sortie un signal de rsultat d'estimation de la proprit de chemin d'mission ;

une tape de calcul de transforme FFT consistant transformer le signal reu en un signal de domaine frquentiel, ce qui permet par consquent de gnrer en sortie un signal du domaine frquentiel ;

une tape de correction consistant corriger une distorsion du signal du domaine frquentiel gnr au cours de l'tape de calcul de transforme FFT, sur la base du signal de rsultat d'estimation de la proprit de chemin d'mission gnr en sortie de l'tape d'estimation de chemin d'mission ;

une tape de calcul de coefficient de fuite consistant calculer un coefficient de fuite d'interfrence entre porteuses sur la base du signal de rsultat d'estimation de la proprit de chemin d'mission gnr au cours de l'tape d'estimation de chemin d'mission, ce qui permet par consquent de gnrer en sortie un signal indiquant le coefficient de fuite ;

une tape d'estimation de composante d'interfrence consistant estimer une composante d'interfrence incluse dans la porteuse (n) devant tre dmodule, sur la base du signal indiquant le coefficient de fuite gnr au cours de l'tape de calcul de coefficient de fuite, et du signal corrig du domaine frquentiel gnr au cours de l'tape de correction ;

une premire tape de soustraction consistant obtenir une premire composante de signal souhaite incluse dans la porteuse (n) devant tre dmodule, en soustrayant la composante d'interfrence estime au cours de l'tape d'estimation de composante d'interfrence du signal du domaine frquentiel gnr au cours de l'tape de calcul de transforme FFT ;

une tape d'estimation de composante de signal consistant estimer une seconde composante de signal souhaite incluse dans une pluralit de porteuses autres que la porteuse (n) devant tre dmodule, sur la base du signal du domaine frquentiel gnr en sortie partir de l'tape de calcul de transforme FFT, du signal de rsultat d'estimation de la proprit de chemin d'mission gnr au cours de l'tape d'estimation de chemin d'mission, du signal indiquant le coefficient de fuite gnr au cours de l'tape de calcul de coefficient de fuite, et du signal corrig du domaine frquentiel gnr au cours de l'tape de correction, la seconde composante de signal tant estime en soustrayant, de chaque porteuse parmi une premire porteuse (n + 1) et une seconde porteuse (n - 1) dans le signal gnr en sortie partir du moyen de calcul de transforme FFT (2) lesquelles sont chacune adjacentes la porteuse (n) devant tre dmodule, une somme de composantes d'interfrence distinctes de signaux fuyant partir de la porteuse (n) devant tre dmodule au niveau de la premire porteuse ou de la seconde porteuse respective (n + 1 ; n - 1) ; et

une tape de combinaison consistant gnrer un signal combin en combinant la premire composante de signal gnre au cours de la premire tape de soustraction et la seconde composante de signal gnre au cours de l'tape d'estimation de composante de signal.

7.  Procd de rception selon la revendication 6, dans lequel l'tape d'estimation de composante de signal comporte :

une tape d'estimation de composantes non souhaites consistant estimer les composantes d'interfrence autres que les signaux fuyant partir de la porteuse (n) qui doit tre dmodule au niveau des premire et seconde porteuses (n + 1, n - 1), sur la base du signal de rsultat d'estimation de la proprit de chemin d'mission gnr au cours de l'tape d'estimation de chemin d'mission, du signal indiquant le coefficient de fuite gnr au cours de l'tape de calcul de coefficient de fuite, et du signal corrig du domaine frquentiel gnr au cours de l'tape de correction ; et

34

une seconde tape de soustraction consistant soustraire, de chacune des premire et seconde porteuses (n + 1, n - 1) dans le signal gnr en sortie partir du moyen de calcul de transforme FFT (2), la somme de composantes d'interfrence autres que les signaux fuyant partir de la porteuse (n) qui doit tre dmodule au niveau de la premire porteuse ou de la seconde porteuse respective (n + 1 ; n - 1).

8. Procd de rception selon la revendication 6 ou 7, comportant en outre une tape de pondration consistant dterminer un coefficient de pondration de chaque porteuse sur la base du signal corrig du domaine frquentiel de chaque porteuse gnr au cours de l'tape de correction, et multiplier le signal corrig du domaine frquentiel par le coefficient de pondration de manire pondrer le signal corrig du domaine frquentiel utilis au cours de l'tape d'estimation de composante d'interfrence et de l'tape d'estimation de composante de signal.

9. Procd de rception selon la revendication 6 ou 7, comportant en outre les tapes ci-dessous consistant :

gnrer une seconde estimation de la composante d'interfrence, sur la base du signal indiquant le coefficient de fuite gnr au cours de l'tape de calcul de coefficient de fuite et du signal combin gnr au cours de l'tape de combinaison ;
obtenir une seconde estimation de la premire composante de signal, en soustrayant la seconde estimation de la composante d'interfrence du signal du domaine frquentiel gnr au cours de l'tape de calcul de transforme FFT ;
gnrer une seconde estimation de la seconde composante de signal sur la base du signal du domaine frquentiel gnr en sortie partir de l'tape de calcul de transforme FFT, du signal de rsultat d'estimation de la proprit de chemin d'mission gnr au cours de l'tape d'estimation de chemin d'mission, du signal indiquant le coefficient de fuite gnr au cours de l'tape de calcul de coefficient de fuite, et du signal combin gnr au cours de l'tape de combinaison ; et
combiner la seconde estimation de la premire composante de signal et la seconde estimation pour le second signal.

10. Procd de rception pour recevoir un signal obtenu en insrant un signal connu dans un signal obtenu par multiplexage en frquence d'une pluralit de porteuses utilises en vue d'envoyer des donnes d'mission, des intervalles donns sur l'axe temporel, ou un signal obtenu par multiplexage en frquence en affectant une porteuse pilote connue une pluralit de porteuses donnes parmi les porteuses utilises en vue d'envoyer des donnes d'mission, en faisant appel une pluralit d'antennes, le procd de rception comportant :

une tape de dmodulation consistant gnrer une pluralit de signaux de dmodulation correspondant respectivement la pluralit d'antennes ;
une tape de correction de dcalage par effet Doppler consistant mettre en oeuvre une correction de dcalage par effet Doppler sur la pluralit de signaux de dmodulation ;
une premire tape de combinaison consistant combiner une pluralit de signaux de dmodulation gnrs au cours de l'tape de dmodulation ; et
une deuxime tape de combinaison consistant combiner des signaux gnrs au cours de l'tape de correction de dcalage par effet Doppler ;
l'tape de dmodulation incluant :

une tape d'estimation de chemin d'mission consistant estimer une proprit de chemin d'mission partir du signal connu ou partir de la porteuse pilote incluse dans le signal reu, ce qui permet par consquent de gnrer en sortie un signal de rsultat d'estimation de la proprit de chemin d'mission ; et
une tape de calcul de transforme FFT consistant transformer le signal reu en un signal de domaine frquentiel, ce qui permet par consquent de gnrer en sortie un signal du domaine frquentiel ;

la premire tape de combinaison incluant :

une tape de combinaison des signaux du domaine frquentiel gnrs au cours de l'tape de calcul de transforme FFT, sur la base du signal gnr au cours de l'tape d'estimation de chemin d'mission ;

l'tape de correction de dcalage par effet Doppler incluant :

une tape de calcul de coefficient de fuite consistant calculer un coefficient de fuite d'interfrence entre porteuses sur la base du signal gnr au cours de l'tape d'estimation de chemin d'mission, ce qui permet par consquent de gnrer en sortie un signal indiquant le coefficient de fuite ;
une tape d'estimation de composante d'interfrence consistant estimer une composante d'interfrence incluse dans la porteuse (n) devant tre dmodule, sur la base du signal indiquant le coefficient de fuite, gnr au cours de l'tape de calcul de coefficient de fuite, et du signal gnr en sortie partir de la premire tape de combinaison ;

une tape de soustraction consistant obtenir une composante de signal souhaite incluse dans la porteuse (n) devant tre dmodule, en soustrayant le signal de composante d'interfrence estime au cours de l'tape d'estimation de composante d'interfrence du signal du domaine frquentiel gnr au cours de l'tape de calcul de transforme FFT ;

une tape d'estimation de composante de signal consistant estimer une seconde composante de signal souhaite incluse dans une pluralit de porteuses autres que la porteuse (n) devant tre dmodule, sur la base du signal du domaine frquentiel gnr au cours de l'tape de calcul de transforme FFT, du signal du domaine frquentiel gnr au cours de l'tape d'estimation de chemin d'mission, du signal indiquant le coefficient de fuite, gnr au cours de l'tape de calcul de coefficient de fuite, et du signal gnr au cours de la premire tape de combinaison, le moyen d'estimation de composante de signal (6, 7, 9, 10) tant agenc de manire estimer la seconde composante de signal en soustrayant, de chaque porteuse parmi une premire porteuse (n + 1) et une seconde porteuse (n - 1) dans le signal gnr en sortie partir du moyen de calcul de transforme FFT (2) lesquelles sont chacune adjacentes la porteuse (n) devant tre dmodule, une somme de composantes d'interfrence distinctes des signaux fuyant partir de la porteuse (n) devant tre dmodule au niveau de la premire porteuse ou de la seconde porteuse respective (n + 1 ; n - 1) ; et

une troisime tape de combinaison consistant combiner des signaux gnrs en sortie de l'tape de soustraction et de l'tape d'estimation de composante de signal ;

la deuxime tape de combinaison incluant une tape de combinaison des signaux gnrs au cours de la troisime tape de combinaison, sur la base du signal de rsultat d'estimation de la proprit de chemin d'mission gnr au cours de l'tape d'estimation de chemin d'mission.

**11.** Dispositif de rception pour recevoir un signal obtenu en insrant un signal connu dans un signal obtenu par multiplexage en frquence d'une pluralit de porteuses utilises en vue d'envoyer des donnes d'mission, des intervalles donns sur l'axe temporel, ou un signal obtenu par multiplexage en frquence en affectant une porteuse pilote connue une pluralit de porteuses donnes parmi les porteuses utilises en vue d'envoyer des donnes d'mission, le dispositif de rception comportant :

un moyen d'estimation de chemin d'mission (1) pour estimer une proprit de chemin d'mission partir du signal connu ou partir de la porteuse pilote incluse dans le signal reu, ce qui permet par consquent de gnrer en sortie un signal de rsultat d'estimation de la proprit de chemin d'mission ;

un moyen de calcul de transforme FFT (2) pour transformer le signal reu en un signal de domaine frquentiel, ce qui permet par consquent de gnrer en sortie un signal du domaine frquentiel ;

un moyen de correction (3) pour corriger une distorsion du signal du domaine frquentiel gnr en sortie partir du moyen de calcul de transforme FFT (2), sur la base du signal de rsultat d'estimation de la proprit de chemin d'mission gnr en sortie partir du moyen d'estimation de chemin d'mission (1) ;

un moyen de calcul de coefficient de fuite (100) pour calculer un coefficient de fuite d'interfrence entre porteuses sur la base du signal de rsultat d'estimation de la proprit de chemin d'mission gnr en sortie du moyen d'estimation de chemin d'mission (1) et d'informations de position de fentre de transforme FFT dans le moyen de calcul de transforme FFT (2), ce qui permet par consquent de gnrer en sortie un signal indiquant le coefficient de fuite ;

un moyen d'estimation de composante d'interfrence (5) pour estimer une composante d'interfrence incluse dans la porteuse (n) devant tre dmodule, sur la base du signal indiquant le coefficient de fuite gnr en sortie partir du moyen de calcul de coefficient de fuite (100), et du signal corrig du domaine frquentiel gnr en sortie partir du moyen de correction (3) ;

un premier moyen de soustraction (8) pour obtenir une premire composante de signal souhaite incluse dans la porteuse (n) devant tre dmodule, en soustrayant la composante d'interfrence estime par le moyen d'estimation de composante d'interfrence (5) du signal du domaine frquentiel gnr en sortie partir du moyen de calcul de transforme FFT (2) ;

un moyen d'estimation de composante de signal (6, 7, 9, 10) pour estimer une seconde composante de signal souhaite incluse dans une pluralit de porteuses autres que la porteuse (n) devant tre dmodule, sur la base du signal du domaine frquentiel gnr en sortie du moyen de calcul de transforme FFT (2), du signal de rsultat d'estimation de la proprit de chemin d'mission gnr en sortie du moyen d'estimation de chemin d'mission (1), du signal indiquant le coefficient de fuite gnr en sortie du moyen de calcul de coefficient de fuite (100), et du signal corrig du domaine frquentiel gnr en sortie partir du moyen de correction (3), le moyen d'estimation de composante de signal (6, 7, 9, 10) tant agenc de manire estimer la seconde composante de signal en soustrayant, de chacune d'une premire porteuse (n + 1) et d'une seconde porteuse (n - 1) dans le signal gnr en sortie du moyen de calcul de transforme FFT (2) lesquelles sont chacune adjacentes la porteuse (n) devant tre dmodule, une somme de composantes d'interfrence autres que les signaux fuyant partir de la porteuse (n) devant tre dmodule au niveau de la premire porteuse ou de la seconde porteuse respective (n + 1 ; n - 1) ; et

un moyen de combinaison (11) pour combiner la premire composante de signal gnre en sortie partir du premier moyen de soustraction (8) et la seconde composante de signal gnre en sortie partir du moyen d'estimation de composante de signal (6, 7, 9, 10).

12. Dispositif de rception pour recevoir un signal obtenu en insrant un signal connu dans un signal obtenu par multiplexage en frquence d'une pluralit de porteuses utilises en vue d'envoyer des donnes d'mission, des intervalles donns sur l'axe temporel, ou un signal obtenu par multiplexage en frquence en affectant une porteuse pilote connue une pluralit de porteuses donnes parmi les porteuses utilises en vue d'envoyer des donnes d'mission, le dispositif de rception comportant :

un moyen d'estimation de chemin d'mission (1) pour estimer une proprit de chemin d'mission partir du signal connu ou partir de la porteuse pilote incluse dans le signal reu, ce qui permet par consquent de gnrer en sortie un signal de rsultat d'estimation de la proprit de chemin d'mission ;

un moyen de calcul de transforme FFT (2) pour transformer le signal reu en un signal de domaine frquentiel, ce qui permet par consquent de gnrer en sortie un signal du domaine frquentiel ;

un moyen de correction (3) pour corriger une distorsion du signal du domaine frquentiel gnr en sortie du moyen de calcul de transforme FFT (2), sur la base du signal de rsultat d'estimation de la proprit de chemin d'mission gnr en sortie partir du moyen d'estimation de chemin d'mission (1) ;

un moyen de dtection de position de fentre de transforme FFT (103) pour dtecter une position de fentre de transforme FFT dans le moyen de calcul de transforme FFT (2), sur la base du signal de rsultat d'estimation de la proprit de chemin d'mission gnr en sortie partir du moyen d'estimation de chemin d'mission (1), ce qui permet par consquent de gnrer des informations de position de fentre de transforme FFT ;

un moyen de calcul de coefficient de fuite (100) pour calculer un coefficient de fuite d'interfrence entre porteuses, sur la base du signal de rsultat d'estimation de la proprit de chemin d'mission gnr en sortie du moyen d'estimation de chemin d'mission (1) et des informations de position de fentre de transforme FFT, ce qui permet par consquent de gnrer en sortie un signal indiquant le coefficient de fuite ;

un moyen d'estimation de composante d'interfrence (5) pour estimer une composante d'interfrence incluse dans la porteuse (n) devant tre dmodule, sur la base du signal indiquant le coefficient de fuite gnr en sortie partir du moyen de calcul de coefficient de fuite (100) et du signal corrig du domaine frquentiel gnr en sortie partir du moyen de correction (3) ;

un premier moyen de soustraction (8) pour obtenir une premire composante de signal souhaite incluse dans la porteuse (n) devant tre dmodule, en soustrayant la composante d'interfrence estime par le moyen d'estimation de composante d'interfrence (5) du signal du domaine frquentiel gnr en sortie partir du moyen de calcul de transforme FFT (2) ;

un moyen d'estimation de composante de signal (6, 7, 9, 10) pour estimer une seconde composante de signal souhaite incluse dans une pluralit de porteuses autres que la porteuse (n) devant tre dmodule, sur la base du signal du domaine frquentiel gnr en sortie partir du moyen de calcul de transforme FFT (2), du signal de rsultat d'estimation de la proprit de chemin d'mission gnr en sortie partir du moyen d'estimation de chemin d'mission (1), du signal indiquant le coefficient de fuite gnr en sortie partir du moyen de calcul de coefficient de fuite (100), et du signal corrig du domaine frquentiel gnr en sortie partir du moyen de correction (3), le moyen d'estimation de composante de signal (6, 7, 9, 10) tant agenc de manire estimer la seconde composante de signal en soustrayant, de chaque porteuse parmi une premire porteuse (n + 1) et une seconde porteuse (n - 1) dans le signal gnr en sortie partir du moyen de calcul de transforme FFT (2) lesquelles sont chacune adjacente la porteuse (n) devant tre dmodule, une somme de composantes d'interfrence distinctes de signaux fuyant partir de la porteuse (n) devant tre dmodule au niveau de la premire porteuse ou de la seconde porteuse respective (n + 1 ; n - 1) ; et

un moyen de combinaison (11) pour combiner la premire composante de signal gnre en sortie partir du premier moyen de soustraction (8) et la seconde composante de signal gnre en sortie partir du moyen d'estimation de composante de signal (6, 7, 9, 10).

13. Dispositif de rception selon la revendication 11 ou 12, dans lequel le moyen de calcul de coefficient de fuite (100) inclut :

au moins un moyen de retard (101a, 101b) pour gnrer la sortie du moyen d'estimation de chemin d'mission (1) aprs un retard d'un intervalle de symbole unique ;

au moins un moyen de correction de phase (102a, 102b) pour donner, la sortie du moyen d'estimation de chemin d'mission (1), une rotation de phase inverse de la rotation de phase de la sortie du moyen d'estimation de chemin d'mission, rsultant de la diffrence par rapport au symbole prcdent ou de la diffrence de la position de fentre de transforme FFT obtenue sous la forme des informations de position de fentre de transforme FFT par rapport la position de rfrence ;

un moyen de calcul de diffrence (32) pour calculer la diffrence entre le signal de rsultat d'estimation de la proprit de chemin d'mission dont la phase a t corrige par le moyen de correction de phase (102a, 102b) et le signal de rsultat d'estimation de la proprit de chemin d'mission, qui a t retard par le moyen de retard (101a, 101b), en units de symboles, et dont la phase a t corrige par le moyen de correction de phase ; et

un moyen de multiplication de matrice constante (33) pour multiplier la sortie du moyen de calcul de diffrence (32) par une matrice constante.

14. Dispositif de rception selon la revendication 12, dans lequel le moyen de dtection de position de fentre de transforme FFT (103) inclut :

un moyen de transformation de Fourier inverse (104) pour mettre en oeuvre une transforme de Fourier inverse sur la sortie du moyen d'estimation de chemin d'mission (1) ;

un moyen de calcul de niveau (105) pour calculer la valeur quadratique de la valeur absolue du signal complexe, qui est la sortie du moyen de transformation de Fourier inverse (104), ou la valeur absolue du signal complexe ; et

un moyen de dtermination de position de fentre (106) pour dtecter une position de fentre de transforme FFT partir d'une modification dans la sortie du moyen de calcul de niveau (105) ou de l'index de la transforme de Fourier inverse qui donne la valeur maximale de la sortie du moyen de calcul de niveau (105).

FIG. 1A

FREQUENCY

$(i+1) \times fc$

$i \times fc$

FIG. 1B

DS

FREQUENCY

CI

# FIG. 2

# FIG. 3

## FIG. 4

RECEIVED SIGNAL

FFT COMPUTATION MEANS — 2

TRANSMISS-ION PATH ESTIMATION MEANS — 1

CORRECTION MEANS — 3

INTERFERENCE COMPONENT ESTIMATION MEANS — 5

ADJACENT-CARRIER INTERFERENCE COMPONENT ESTIMATION MEANS (1) — 6

ADJACENT-CARRIER INTERFERENCE COMPONENT ESTIMATION MEANS (2) — 7

LEAK-IN COEFFICIENT CALCULATION MEANS — 4

SUBTRACTION MEANS (0) — 8

SUBTRACTION MEANS (1) — 9

SUBTRACTION MEANS (2) — 10

COMBINING MEANS — 11

EP 2 509 240 B1

# FIG. 5

# FIG. 6

# FIG. 7

CARRIER DIRECTION

SYMBOL DIRECTION

FREQUENCY

TIME

● PILOT CARRIER

○ CARRIER SENDING TRANSMISSION DATA

## FIG. 8A

CARRIER DIRECTION

FREQUENCY

SYMBOL DIRECTION

TIME

TRANSMISSION PATH PROPERTY
● ACTING ON PILOT CARRIER

⊘ TRANSMISSION PATH PROPERTY
INTERPOLATED IN CARRIER DIRECTION

## FIG. 8B

CARRIER DIRECTION

FREQUENCY

SYMBOL DIRECTION

TIME

●TRANSMISSION PATH PROPERTY ACTING ON PILOT CARRIER

⊘ TRANSMISSION PATH PROPERTY
INTERPOLATED IN CARRIER DIRECTION

# FIG. 9

# FIG. 10

# FIG. 11

INTERFERENCE
COMPONENT

FREQUENCY

n-2  n-1  n

LO₂

FREQUENCY

n-2  n-1  n

FIG. 12

EP 2 509 240 B1

FIG. 13

FIG. 14

# FIG. 15A

WEIGHTING
COEFFICIENT

# FIG. 15B

WEIGHTING
COEFFICIENT

FIG. 16

EP 2 509 240 B1

# FIG. 17

RECEIVED SIGNAL → DEMODULATION MEANS (1) [21]

RESULT OF TRANSMISSION PATH ESTIMATION

RESULT OF FFT OF RECEIVED SIGNAL

FIRST COMBINING MEANS [23]

RESULT OF COMBINING

DOPPLER SHIFT CORRECTION MEANS (1) [24]

RESULT OF DOPPLER SHIFT CORRECTION

RECEIVED SIGNAL → DEMODULATION MEANS (2) [22]

RESULT OF FFT OF RECEIVED SIGNAL

RESULT OF COMBINING

DOPPLER SHIFT CORRECTION MEANS (2) [25]

RESULT OF DOPPLER SHIFT CORRECTION RESULT

RESULT OF TRANSMISSION PATH ESTIMATION

SECOND COMBINING MEANS [26]

# FIG. 18

21 OR 22

DEMODULATION MEANS

2

FFT COMPUTATION
MEANS

FFT RESULT OF
RECEIVED SIGNAL

1

TRANSMISSION PATH
ESTIMATION MEANS

RESULT OF
TRANSMISSION
PASS ESTIMATION

## FIG. 19

DOPPLER SHIFT CORRECTION MEANS

RECEIVED SIGNAL

RESULT OF COMBINING

RESULT OF TRANSMISSION PATH ESTIMATION

SUBTRACTION MEANS (0) — 8

SUBTRACTION MEANS (1) — 9

SUBTRACTION MEANS (2) — 10

COMBINING MEANS — 11

RESULT OF DOPPLER SHIFT RESULT

24 OR 25

INTERFERENCE COMPONENT ESTIMATION MEANS — 5

ADJACENT-CARRIER INTERFERENCE COMPONENT ESTIMATION MEANS (1) — 6

ADJACENT-CARRIER INTERFERENCE COMPONENT ESTIMATION MEANS (2) — 7

LEAK-IN COEFFICIENT CALCULATION MEANS — 4

EP 2 509 240 B1

FIG. 20

EP 2 509 240 B1

## FIG. 21

TRANSMISSION PATH ESTIMATION MEANS — 1

FFT WINDOW INFORMATION

100 — SECOND LEAK–IN COEFFICIENT CALCULATION MEANS

101a — DELAY MEANS (1)

101b — DELAY MEANS (2)

102a — PHASE CORRECTION MEANS (1)

102b — PHASE CORRECTION MEANS (2)

32 — DIFFERENCE CALCULATION MEANS

33 — CONSTANT MATRIX MULTIPLICATION MEANS

EP 2 509 240 B1

# FIG. 22

EP 2 509 240 B1

## FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007046503 A

**Non-patent literature cited in the description**

- **MITSURU NAKAYAMA ; MASAHIRO FUJII ; MAKOTO ITAMI ; KOJI ITO.** MMSE ICI canceller for OFDM Mobile Reception. *Journal of the Institute of Image Information and Television Engineers,* 2004, vol. 58 (1), 83-90

- **K. SCHMIDT et al.** Low Complexity Inter-Carrier Interference Compensation for Mobile Reception of DVB-T. *9th International OFDM-Workshop,* 2004, 72-76